# EUROPÄISCHE PATENTSCHRIFT

(11) **EP 2 810 819 B1**
(45) Veröffentlichungstag und Bekanntmachung des Hinweises auf die Patenterteilung: **30.11.2016**
(21) Anmeldenummer: 13197246.5
(22) Anmeldetag: 13.12.2013
(51) Int. Cl.: B60N 2/50, B60N 2/54, B60N 2/52

(54) **Fahrzeugsitz und Kraftfahrzeug oder Nutzkraftfahrzeug**
Vehicle seat, and motor vehicle or commercial motor vehicle
Siège de véhicule et véhicule automobile ou véhicule utilitaire

(30) Priorität: 04.06.2013 DE 102013105720; 19.09.2013 DE 102013110370
(43) Veröffentlichungstag der Anmeldung: 10.12.2014
(73) Patentinhaber: GRAMMER AG, 92224 Amberg (DE)
(72) Erfinder: Kolb, Jens, 92281 Königstein (DE)
(74) Vertreter: Hannke, Christian

(56) Entgegenhaltungen:
- EP-A1- 2 415 632
- EP-A1- 2 468 568
- EP-A2- 2 481 630
- DE-A1- 3 517 345

## Beschreibung

Die Erfindung betrifft einen Fahrzeugsitz mit einem sich in Fahrzeuglängsrichtung und in Fahrzeugbreitenrichtung erstreckenden Sitzteil zum Aufnehmen einer Person, mit einem Rückenlehnenteil zum rückseitigen Abstützen der Person und mit einem Sitzunterbau zum Federn und/oder Dämpfen zumindest des Sitzteils gegenüber einer Karosserie eines Fahrzeugs, bei welchem der Sitzunterbau zumindest eine Horizontalfederungseinrichtung zum Federn des Sitzteils gegenüber der Karosserie in Fahrzeuglängsrichtung und/oder in Fahrzeugbreitenrichtung umfasst, wobei die zumindest eine Horizontalfederungseinrichtung ein karosserieseitiges Unterteil und ein hierzu relativ verlagerbares sitzteilseitiges Oberteil umfasst, bei welchem zwischen dem sitzteilseitigen Oberteil und dem karosserieseitigen Unterteil eine Koppeleinrichtung wechselwirkend angeordnet ist, wobei die Koppeleinrichtung als ein erstes Koppelelement ein deformierbares Federungselement und als ein weiteres Koppelelement eine Lager- und Deformationseinrichtung hierfür umfasst, wobei das deformierbare Federungselement zwischen zwei aufeinander zugerichteten Anlageflächen eines Aufnahmeraumes der Lager- und Deformationseinrichtung angeordnet ist, und wobei die Koppelelemente jeweils mit dem sitzteilseitigen Oberteil oder mit dem karosserieseitigen Unterteil gekoppelt sind.

Darüber hinaus betrifft die Erfindung ein Kraftfahrzeug oder ein Nutzkraftfahrzeug mit einer Fahrgastzelle und einem darin angeordneten Fahrzeugsitz zum Aufnehmen eines Fahrgastes.

Gattungsgemäße Fahrzeugsitze sind aus dem Stand hinlänglich bekannt und werden insbesondere in geländegängige Kraftfahrzeuge bzw. Nutzkraftfahrzeuge eingesetzt, um einem Fahrgast, insbesondere einem Fahrer, einen höchstmöglichen Fahrkomfort auch bei unwegsamen bzw. nicht befestigten Fahrbahnverhältnissen bieten zu können.

Hierzu umfassen die Fahrzeugsitze sowohl horizontal als auch vertikal wirkende Federungssowie Dämpfungseinrichtungen, mittels welchen zumindest das Sitzteil des Fahrzeugsitzes entsprechend gut gegenüber der Karosserie des Fahrzeuges gelagert ist.

Oftmals baut speziell ein diesbezüglicher Sitzunterbau des Fahrzeugsitzes aufgrund viel Bauraum einnehmender Federungs- und/oder Dämpfungseinrichtungen recht groß. So nehmen aus dem Stand der Technik bekannte Horizontalfederungseinrichtungen einen äußerst üppigen Platzbedarf in Anspruch, da sie stets die Verwendung von in der zu federnden Richtung orientierten Federungselemente, wie beispielsweise Schraubenfederungselemente, erfordern. Eine derartige Anordnung führt jedoch dazu, dass die Horizontalfederungseinrichtung zum Erreichen einer bestimmten Federungscharakteristik in der zu federnden Richtung sehr groß baut bzw. nur ein entsprechend kleineres Federungselement verwendet werden kann. Bei letzterer Wahl kann die gewünschte Federungscharakteristik oftmals jedoch nicht oder nur unzureichend erzielt werden. Darüber hinaus sind die Federkennlinien insbesondere der in den Horizontalfederungseinrichtungen verbauten Federungselemente nicht oder nur unzureichend veränderbar bzw. beeinflussbar, wodurch die resultierende Federungscharakteristik nicht optimal eingestellt werden kann.

Aus der Offenlegungsschrift DE 10 2010 055 342 A1 ist ein gattungsgemäßer Fahrzeugsitz für ein Fahrzeug, insbesondere für ein geländegängiges Fahrzeug, bekannt, der insbesondere eine Horizontalfederungseinrichtung aufweist, welche durch zumindest ein in einem Aufnahmevolumen aktiv veränderbares und sich zwischen zwei Anbringungsbereichen länglich erstreckendes Fluidfederelement umfasst, auf das geneigt zu seiner Längsrichtung mit einer Deformationseinrichtung zum Verformen, insbesondere zum Biegen, des Fluidfederelementes Druckkräfte aufbringbar sind. Durch die so aufgebaute Federungseinrichtung kann insbesondere eine sehr kompakt bauende Horizontalfederungseinrichtung in dem Sitzunterbau unterhalb eines Sitzteils des Fahrzeugsitzes integriert werden. Speziell durch das verwendete Fluidfederelement kann zudem die Federcharakteristik in gewissen Grenzen eingestellt werden, so dass die vorstehend genannten Nachteile zumindest teilweise gut überwunden werden können.

Aus der EP2415632A1 ist ein gattungsgemässer Fahrzeugsitz benannt.

Es ist Aufgabe vorliegender Erfindung, gattungsgemäße Fahrzeugsitze, insbesondere Horizontalfederungseinrichtungen derartiger gattungsgemäßer Fahrzeugsitze, weiterzuentwickeln, so dass sie insbesondere in Fahrzeuglängsrichtung und/oder in Fahrzeugbreitenrichtung verbesserte Funktionseigenschaften aufweisen.

Die Aufgabe der Erfindung wird von einem Fahrzeugsitz nach Anspruch 1 gelöst.

Dadurch, dass die Koppelelemente jeweils an dem sitzteilseitigen Oberteil oder an dem karosserieseitigen Unterteil und jeweils relativ verlagerbar gegenüber diese angeordnet sind, kann ein Abstand einer diesbezüglichen Koppelstelle zwischen den Koppelelementen und dem sitzteilseitigen Oberteil und/oder dem karosserieseitigen Unterteil in Bezug auf dieses Ober- bzw. Unterteil variiert werden, wodurch vorteilhafterweise eine Nulllagenkorrektur in Abhängigkeit eines Fahrzeugneigungswinkels bzw. einer Sitzteilneigung bezogen auf eine fiktive Horizontalebene baulich einfach sogleich durch die horizontale Federungseinrichtung erzielt werden.

Eine derartig einfach konstruierte und wirkende Nulllagenkorrektur ist bisher nicht bekannt. Darüber hinaus kann mittels einer derartigen Anordnung sogleich eine Federungscharakteristik des deformierbaren Federungselements gegenüber der aus dem Stand der Technik bekannten Möglichkeit zusätzlich signifikant verändert werden.

Insgesamt kann hierdurch die Funktionalität der vorliegenden Horizontalfederungseinrichtung gegenüber den bisher bekannten Horizontalfederungseinrichtungen enorm erweitert und verbessert werden.

Der Begriff "Horizontalfederungseinrichtung" beschriebt im Sinne der Erfindung eine Linearhorizontalfederungseinrichtung, mittels welcher insbesondere das sitzteilseitige Oberteil gegenüber dem karosserieseitigen Unterteil federnd gelagert ist, wobei die Horizontalfederungseinrichtung ungedämpft und gedämpft ausgeführt sein können. Dies geschieht konstruktiv zumindest teilweise durch die Koppeleinrichtung.

Der Begriff "Koppeleinrichtung" beschreibt im Sinne der Erfindung jegliche Einrichtung, mittels welcher das sitzteilseitige Oberteil gegenüber dem karosserieseitigen Unterteil derart mechanisch gekoppelt werden kann, dass das sitzteilseitige Oberteil das karosserieseitige Unterteil mit einer Horizontalkomponente relativ zueinander verlagerbar angeordnet sind.

Der Begriff "sitzteilseitiges Oberteil" beschreibt im Sinne der Erfindung ein Bauteil oder eine Bauteilgruppe, an welches bzw. an welcher das Sitzteil angeordnet ist. Gegebenenfalls umfasst das sitzteilseitige Oberteil sogleich das Sitzteil des Fahrzeugsitzes, wodurch sich der Aufbau der Horizontalfederungseinrichtung weiter vereinfachen kann.

Entsprechend beschreibt der Begriff "karosserieseitiges Unterteil" vorliegend ein Bauteil oder eine Bauteilgruppe, welches bzw. welche an der Karosserie des Fahrzeugs angeordnet ist. Gegebenenfalls umfasst das karosserieseitige Unterteil sogleich einen Teilbereich der Karosserie.

Als deformierbares Federungselement kommt idealerweise ein Fluidfederungselement in Frage, wobei es sich bei dem Fluidfederungselement vorzugsweise um ein Pneumatikfederungselement handelt.

Je nach gewählter Ausführungsvariante des Fahrzeugsitzes bzw. dessen Horizontalfederungseinrichtung kann das vorliegende Federungselement auch als Schraubenfederungselement oder auch als ein Gummifederungselement oder dergleichen ausgestaltet sein.

Letztere sind besonders deshalb vorteilhaft, da mittels der erfindungsgemäßen Anordnung die Kennlinien der Schraubenfederungselemente bzw. der Gummifederungselemente sehr gut brauchbar verändert werden können.

Selbst eine größere Nulllagenkorrektur mit ausreichenden Korrekturwegen ist möglich, wenn das Federungselement speziell als Schraubenfederungselement bzw. als Gummifederungselement ausgelegt ist.

Während bei einem Fluidfederelement die Federkennlinie bzw. eine Nulllagenkorrektur in geringen Grenzen durch die entsprechende Druckbeaufschlagung des Fluidfederelementes einstellbar ist, war dies hinsichtlich eines Schraubenfederungselementes bzw. eines Gummifederungselementes nicht möglich.

Es versteht sich, dass die Lager- und Deformationseinrichtung zum Lagern und Deformieren des deformierbaren Federungselements sehr unterschiedlich gestaltet werden kann.

Speziell die zwei aufeinander zugerichteten Anlageflächen können hierbei parallel verlaufend zueinander angeordnet sein.

Vorzugsweise sind die zwei aufeinander zugerichteten Anlageflächen oder zumindest eine dieser Anlageflächen gekrümmt, wobei sie hinsichtlich einer Lagerachse, entlang welcher sich ein Aufnahmeraum für das deformierbare Federungselement erstreckt, insbesondere spiegelbildlich gekrümmt oder asymmetrisch zueinander gekrümmt sein können.

Durch eine wie auch immer geartete gekrümmte Anlagefläche kann eine Federkraft zum Federwegsende hin konstruktiv einfach progressiv ausgelegt werden.

Insofern stellt die Lager- und Deformationseinrichtung einen mittleren Angriffspunkt des Federungselementes dar.

Hierbei handelt es sich um ein Federungsprinzip im Sinne eines querbelasteten Federungselements, wie eines Schraubenfederelementes oder dergleichen.

Idealer Weise verläuft die Längserstreckung des Aufnahmeraums quer zu der jeweiligen Horizontalfederungsrichtung, wobei die Horizontalfederungsrichtung beispielsweise in Fahrzeuglängsrichtung oder in Fahrzeugbreitenrichtung ausgerichtet sein kann.

Es versteht sich, dass das erste Koppelelement hierbei an dem sitzteilseitigen Oberteil oder dem karosserieseitigen Unterteil angeordnet sein kann, wenn das weitere Koppelelement entsprechend an dem karosserieseitigen Unterteil bzw. an dem sitzteilseitigen Oberteil angeordnet ist.

Es versteht sich darüber hinaus, dass die Koppelelemente jeweils sowohl gegenüber dem sitzteilseitigen Oberteil als auch gegenüber dem karosserieseitigen Unterteil relativ verlagerbar angeordnet sind. Insofern sieht die Erfindung vor vor, dass das erste Koppelelement relativ verlagerbar gegenüber und an dem sitzteilseitigen Oberteil und das weitere Koppelelement relativ verlagerbar gegenüber und an dem karosserieseitigen Unterteil angeordnet ist, oder umgekehrt.

Insofern versteht es sich, dass das erste Koppelelement mit dem sitzteilseitigen Oberteil und das weitere Koppelelement mit dem karosserieseitigen Unterteil, oder umgekehrt, gekoppelt sein kann, wenn die Rede davon ist, dass die Koppelelemente jeweils mit dem sitzteilseitigen Oberteil oder mit dem karosserieseitigen Unterteil gekoppelt sind. Somit ist es unerheblich, ob die Nulllagenkorrektur durch Linearverstellung an der Koppelstelle zum sitzteilseitigen Oberteil oder an der Koppelstelle zum karosserieseitigen Unterteil erfolgt.

Die Erfindung sieht vor, dass die Koppeleinrichtung eine Koppelstellen-Lageverstelleinheit zum relativen Verlagern einer zwischen wenigsten einem der Koppelelemente und dem sitzteilseitigen Oberteil und/oder dem karosserieseitigen Unterteil vorhandenen Koppelstelle gegenüber dem sitzteilseitigen Oberteil oder dem karosserieseitigen Unterteil aufweist.

Der Begriff "Koppelstelle" beschreibt im Sinne der Erfindung denjenigen Koppelpunkt bzw. Koppelbereich, an welchem das jeweilige Koppelelement mit dem sitzteilseitigen Oberteil und/oder dem karosserieseitigen Unterteil konstruktiv verlagerbar wirkverbunden ist.

Hierbei kann das entsprechende Koppelelement mittels einer Koppelstelle oder alternativ auch mittels zwei oder mehr solcher vorteilhaften Koppelstellen an dem sitzteilseitigen Oberteil oder an dem karosserieseitigen Unterteil gekoppelt sein.

Mittels der vorliegenden Koppelstellen-Lageverstelleinheit gelingt es vorteilhafterweise, einen Koppelungsabstand zwischen den Koppelelementen und dem jeweiligen sitzteilseitigen Oberteil bzw. karosserieseitigen Unterteil bedarfsweise zu variieren, um hierdurch eine gewünschte Horizontalnulllagenkorrektur bzw. eine Federkennlinienveränderung zu erzielen.

Erfindungsgemäss umfasst die Koppeleinrichtung eine Nulllagenkorrektureinheit zum Anpassen der Horizontal-Nulllagenposition der Horizontalfederungseinrichtung, wobei das erste Koppelelement und das sitzteilseitige Oberteil in einer gemeinsamen Oberteilkoppelstelle derart miteinander gekoppelt sind, dass die Lage der Oberteilkoppelstelle relativ zu dem sitzteilseitigen Oberteil variabel einstellbar ist.

Erfindungsgemäss ist es vorgesehen, dass die Koppeleinrichtung eine Nulllagenkorrektureinheit zum Anpassen der Horizontal-Nulllagenposition der Horizontalfederungseinrichtung umfasst, wobei das weitere Koppelelement und das karosserieseitige Unterteil in einer gemeinsamen Unterteilkoppelstelle derart miteinander gekoppelt sind, dass die Lage der Unterteilkoppelstelle relativ zu dem karosserieseitigen Unterteil variabel einstellbar ist.

Durch die hier beschriebene Nulllagenkorrektureinheit gelingt es auf konstruktiv besonders einfache Weise, eine aufgrund einer Neigung des Fahrzeugs aus der Horizontalnulllage heraus verschobene Horizontalfederungseinrichtung zumindest teilweise derart zu verlagern, dass beidseits der Horizontalnulllage ein möglichst gleicher bzw. großer Federungsweg zur Verfügung steht, so dass die Gefahr eines Anschlagens an einem Endanschlag durch einen zu geringen Federungsweg erheblich reduziert ist.

Nach einem anderen Aspekt der Erfindung ist es vorteilhaft, wenn die Koppeleinrichtung eine Federkennlinienanpassungseinheit zum Anpassen der Federkennlinie des deformierbaren Federungselements umfasst, wobei das erste Koppelelement und das sitzteilseitige Oberteil in einer gemeinsamen Oberteilkoppelungsstelle derart miteinander gekoppelt sind, dass die Lage in der Oberteilkoppelungsstelle relativ zu dem sitzteilseitigen Oberteil variabel einstellbar ist.

Kumulativ oder alternativ hierzu ist es vorteilhaft, wenn die Koppeleinrichtung eine Federkennlinienanpassungseinheit zum Anpassen der Federkennlinie des deformierbaren Federungselements umfasst, wobei das weitere Koppelelement und das karosserieseitige Unterteil in einer gemeinsamen Unterteilkoppelungsstelle derart miteinander gekoppelt sind, dass die Lage der Unterteilkoppelungsstelle relativ zu dem karosserieseitigen Unterteil variabel einstellbar ist.

Durch eine derartige Federkennlinienanpassungseinheit gelingt baulich besonders einfach, die Federkennlinie in einem besonders großen Bereich an die jeweiligen Gegebenheiten, wie etwa an das Gewicht des Fahrgastes, anpassen zu können.

Darüber hinaus ist es vorteilhaft, wenn die Koppeleinrichtung eine mechanisch oder pneumatisch arbeitende Einstelleinrichtung zum Verlagern der Koppelstellen gegenüber dem sitzteilseitigen Oberteil und/oder dem karosserieseitigen Unterteil umfasst. Durch eine mechanisch oder pneumatisch arbeitende Einstelleinrichtung können die Koppelstellen-Lageverstelleinheit und insbesondere die Nulllagenkorrektureinheit bzw. die Federkennlinienanpassungseinheit zumindest teilweise konstruktiv sehr einfach realisiert sein.

Eine derartig mechanisch oder pneumatisch arbeitende Einstelleinrichtung kann beispielsweise durch eine elektrisch betriebene Linearmotoreinheit oder durch eine Pneumatik-Zylinderkolben-Einheit baulich einfach verwirklicht.

Es versteht sich, dass die Realisierung der Koppeleinrichtung auf diese Ausführungsbeispiele nicht beschränkt sein muss, sondern dass auch andere Konstruktionen, mittels welchen die jeweilige Koppelstelle gegenüber dem sitzteilseitigen Oberteil bzw. dem karosserieseitigen Unterteil unterschiedlich beabstandet werden kann und konstruktiv realisiert werden kann. Bei entsprechender Ausgestaltung kann auch eine hydraulisch arbeitende Einstelleinrichtung vorgesehen werden.

Darüber hinaus ist es vorteilhaft, wenn eines der Koppelelemente zum Ausgestalten der jeweiligen Koppelstelle ein Drehlager und/oder ein Linearlager umfasst.

Mittels der Drehlagers zwischen einem der Koppelelemente und dem sitzteilseitigen Oberteil oder dem karosserieseitigen Unterteil gelingt konstruktiv einfach etwa ein Ausgleich hinsichtlich einer Längenänderung bei einer Biegung dieses Koppelelements, insbesondere hinsichtlich des deformierbaren Federungselements.

Mittels des Linearlagers hingegen gelingt eine vorteilhafte und zielgerichtete Führung der durch die Koppelstellen-Lageverstelleinheit bzw. der Nulllagenkorrektureinheit oder Federkennlinienanpassungseinheit verlagerten Koppelstelle, so dass die gewünschten Effekte hinsichtlich einer Nulllagenkorrektur bzw. einer Federkennlinienanpassung besonders gezielt umgesetzt werden können.

Beispielsweise ist das Linearlager als Gleitlagerelement ausgestaltet, bei welchem ein Gleitelement in und entlang einer Führungsnut bewegt werden kann.

In diesem Zusammenhang ist es auch vorteilhaft, wenn das Linearlager eine gekrümmte Bahnkurve umfasst, entlang welcher ein durch das Linearlager ausgestalteter Koppelpunkt bewegbar angeordnet ist. Beispielsweise lässt sich über eine gekrümmt oder schräg ausgestaltete Kulisse insbesondere eine weitere Progressionsmöglichkeit an der Horizontalfederungseinrichtung hinsichtlich des deformierbaren Federungselements erreichen, so dass hierdurch ein ansonsten erforderlicher Korrekturweg reduziert werden kann.

Hinsichtlich einer alternativen Ausführungsvariante ist es vorteilhaft, wenn eines der Koppelelemente sowohl mittels eines Anbringbereich ortsfest als auch mittels einer gegenüber dem sitzteilseitigen Oberteil oder dem karosserieseitigen Unterteil verlagerbaren Koppelstelle verlagerbar an dem sitzteilseitigen Oberteil oder an dem karosserieseitigen Unterteil abgeordnet ist. Auch hierdurch kann eine sehr einfach und kompakt bauende Horizontalfederungseinrichtung bereitgestellt werden.

Darüber hinaus ist es vorteilhaft, wenn die Nulllagenkorrektureinheit und/oder die Federkennlinienanpassungseinheit derart zwischen einem der Koppelelemente und dem sitzteilseitigen Oberteil oder dem karosserieseitigen Unterteil angeordnet sind, dass das jeweilige Koppelelement mittels der Nulllagenkorrektureinheit oder der Federkennlinienanpassungseinheit mit dem sitzteilseitigen Oberteil oder dem karosserieseitigen Unterteil wirkverbunden ist. Hierdurch kann der Aufbau der Koppeleinrichtung baulich besonders einfach und kompakt gestaltet werden.

Gemäß einer weiteren bevorzugten Ausführungsform ist es vorteilhaft, wenn die Nulllagenkorrektureinheit und/oder die Federkennlinienanpassungseinheit eine Frequenzselektionseinrichtung umfassen, um höherfrequente Fremdanregungen von einfachen Neigungsregungen unterscheiden zu können.

Darüber hinaus ist es vorteilhaft, wenn die Horizontalfederungseinrichtung des Fahrzeugsitzes mit bevorzugt nur einem insbesondere in gegensätzlichen Richtungen wirkenden Federungselement in Fahrzeuglängsrichtung und/oder Fahrzeugbreitenrichtung realisiert ist. Hierdurch kann eine extrem schlanke, also eine extrem wenig Bauraum benötigende Horizontalfederungseinrichtung bereitgestellt werden.

Es ist aber auch vorteilhaft, wenn mehrere Federungselemente vorgesehen sind, wobei genau ein Federungselement oder mehrere Federungselemente zum Federn des Fahrzeugsitzes bzw. des Sitzteils in Fahrzeuglängsrichtung und/oder genau ein Federungselement oder mehrere Federungselemente zum Federn des Fahrzeugsitzes bzw. des Sitzteils in Fahrzeugbreitenrichtung vorgesehen sind. Hierdurch kann ein entsprechend hoher Federungskomfort baulich kompakt erzielt werden.

An dieser Stelle sei noch erwähnt, dass es im Zusammenhang mit einem Fluidfederungselement vorteilhaft ist, wenn der Fahrzeugsitz eine oder mehrere Druckgasquellen umfasst. Als Druckgasquellen können hierbei bevorzugt Zuführeinrichtungen angesehen werden, welche das Gas mit einem Druck über den Umgebungsdruck bereitstellen. Besonders bevorzugt ist vorliegend eine Druckgasquelle, zum Beispiel ein Kompressor, ein Druckbehälter, ein Zusatzvolumen oder ähnliches oder Kombinationen hieraus.

Des Weiteren ist es vorteilhaft, wenn mindestens eine Sensoreinrichtung zur Erfassung von zum Beispiel Sitzteilbewegungen, Federungsbewegungen, Bewegungen des deformierbaren Federungselements, der Lager- und Deformationseinrichtung, und/oder Fahrzeugbewegungen, insbesondere in Fahrzeuglängsrichtung und/oder Fahrzeugbreitenrichtung, und/oder zur Erfassung von Stellungen bzw. Positionen des Sitzteils, des Federungselementes, der Lage- und Deformationseinrichtung und/oder des Fahrzeuges vorgesehen ist, welche Daten an eine Steuereinrichtung zum Ansteuern der Druckgasquelle übermitteln kann.

Es ist darüber hinaus denkbar, dass zum Erfassen einzelner oder aller der zuvor genannten Stellungen und/oder Bewegungen mehrere verschiedene und an verschiedene Positionen angeordnete Sensoreinrichtungen vorgesehen sind.

Die Sensoreinrichtung stellt bevorzugt ein Wegmesssystem zur Erfassung der Position der Deformationseinrichtung, der Durchbiegung des deformierbaren Federungselements und/oder der Dehnung des deformierbaren Federungselements dar.

Insbesondere ist Letzteres vorteilhaft, da hierdurch eine genaue Erfassung der jeweiligen Fahrer- und/oder Sitzsituation bevorzugt in Echtzeit möglich ist.

Es ist darüber hinaus auch möglich, dass ein Wegmesssystem auch nur eine Nulllagenabweichung erfasst, unabhängig von einer Deformation.

Weiterhin ist denkbar, dass die von den Sensoreinrichtungen erfassten Daten, zum Beispiel vom Fahrzeugsitz oder dem Fahrzeug gespeichert werden, um beispielsweise zu einem späteren Zeitpunkt, wie etwa bei einem Wartungstermin, ausgewertet werden zu können.

Die Aufgabe der Erfindung wird auch von einem Kraftfahrzeug oder einem Nutzkraftfahrzeug mit einer Fahrgastzelle und einem darin angeordneten Fahrzeugsitz zum Aufnehmen eines Fahrgastes gelöst, wobei das Kraftfahrzeug oder das Nutzkraftfahrzeug einen Fahrzeugsitz nach einem der hier beschriebenen Merkmalskombinationen aufweist.

Vorteilhafterweise kann der Fahrkomfort an einem mit dem vorliegenden Fahrzeugsitz ausgerüsteten Kraftfahrzeug oder Nutzkraftfahrzeug wesentlich verbessertet werden, wodurch auch die Unfallgefahr erheblich reduziert wird, da der Fahrgast bzw. die auf dem Fahrzeugsitz sitzende Person wesentlich besser durch den Fahrzeugsitz unterstützt wird. Hierdurch kann sich insbesondere der Fahrzeugführer besser auf den eigentlichen Fahrbetrieb des Kraftfahrzeugs oder Nutzkraftfahrzeugs konzentrieren.

Weitere Vorteile, Ziele und Eigenschaften vorliegender Erfindung werden anhand anliegender Zeichnung und nachfolgender Beschreibung erläutert, in welchen beispielhaft insbesondere unterschiedliche Ausgestaltungsmöglichkeiten von Koppeleinrichtungen bezüglich einer Horizontalfederungseinrichtung eines erfindungsgemäßen Fahrzeugsitzes dargestellt und beschrieben ist. Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine Seitenansicht eines in einem Fahrzeug angeordneten Fahrzeugsitzes mit einer zwischen einem sitzteilseitigen Oberteil einer Horizontalfederungseinrichtung und einem karosserieseitigen Unterteil der Horizontalfederungseinrichtung wirkenden Koppeleinrichtung;
- Figur 2A: schematisch eine erste Prinzipansicht der beispielhaft in den Sitzunterbau verbauten und ein Federungselement sowie ein Dämpfungselement umfassenden Horizontalfederungseinrichtung in einer Nulllage dieser Horizontalfederungseinrichtung;
- Figur 2B: schematisch eine zweite Prinzipansicht der Horizontalfederungseinrichtung aus der Figur 2A mit einem gegenüber dem karosserieseitigen Unterteil maximal nach hinten, also entgegen der Vorwärtsfahrtrichtung, aus der Nulllage heraus ausgelenkten sitzseitigen Oberteil;
- Figur 2C: schematisch eine dritte Prinzipansicht der Horizontalfederungseinrichtung aus den Figuren 2A und 2B mit einem gegenüber dem karosserieseitigen Unterteil maximal nach vorne, also in Vorwärtsfahrtrichtung, aus der Nulllage heraus ausgelenkten sitzseitigen Oberteil;
- Figur 2D: schematisch eine weitere Prinzipansicht der Horizontalfederungseinrichtung aus den Figuren 2A bis 2C in einer Schräglage bei einem gegenüber einer fiktiven Horizontalebene nach vorne geneigten Fahrzeug aus der Figur 1;
- Figur 2E: schematisch eine Ansicht eines Kraft-Weg-Diagramms bezüglich einer auf die Horizontalfederungseinrichtung wirkenden Hangabtriebskraft und einer hieraus resultierenden Auslenkung des sitzteilseitigen Oberteils der Horizontalfederungseinrichtung;
- Figur 2F: schematisch eine andere Prinzipansicht der Horizontalfederungseinrichtung aus den Figuren 2A bis 2D mit einer gegenüber der Prinzipansicht aus der Figur 2D erfolgten Korrekturverschiebung des sitzteilseitigen Oberteils in die Nulllage mithilfe einer ersten möglichen Lageverstellmechanik;
- Figur 2G: schematisch eine Ansicht eines anderen Kraft-Weg-Diagramms bezüglich einer auf die Horizontalfederungseinrichtung wirkenden Hangabtriebskraft, einer hieraus resultierenden Auslenkung des sitzteilseitigen Oberteils der Horizontalfederungseinrichtung und einer entsprechenden Korrekturverschiebung gemäß der Prinzipansicht aus der Figur 2F;
- Figur 3A: schematisch eine Ansicht einer anderen möglichen an der Horizontalfederungseinrichtung einsetzbaren Lageverstellmechanik;
- Figur 3B: schematisch eine weitere Ansicht der anderen möglichen Lageverstellmechanik aus der Figur 3A;
- Figur 4: schematisch eine Ansicht einer ersten alternativen Ausgestaltungsmöglichkeit einer Koppeleinrichtung zum Koppeln des sitzteilseitigen Oberteils und des karosserieseitigen Unterteils der Horizontalfederungseinrichtung;
- Figur 5: schematisch eine Ansicht einer zweiten alternativen Ausgestaltungsmöglichkeit einer Koppeleinrichtung zum Koppeln des sitzteilseitigen Oberteils und des karosserieseitigen Unterteils der Horizontalfederungseinrichtung, wobei ein Koppelelement einer Koppelstellen-Lageverstelleinheit doppelseitig an dem sitzteilseitige Oberteil angelenkt angeordnet ist;
- Figur 6: schematisch eine Ansicht eines Kraft-Weg-Diagramms bezüglich einer auf die Horizontalfederungseinrichtung wirkenden Hangabtriebskraft und einer hieraus resultierenden Auslenkung des sitzteilseitigen Oberteils der Horizontalfederungseinrichtung gemäß der in der Figur 4 oder der Figur 5 gezeigten Ausgestaltung;
- Figur 7: schematisch eine Ansicht eines anderen Kraft-Weg-Diagramms bezüglich einer auf die Horizontalfederungseinrichtung wirkenden Hangabtriebskraft, einer hieraus resultierenden Auslenkung des sitzteilseitigen Oberteils der Horizontalfederungseinrichtung und einer entsprechenden Korrekturverschiebung gemäß der in der Figur 4 oder der Figur 5 gezeigten Ausgestaltung;
- Figur 8: schematisch eine Ansicht einer dritten alternativen Ausgestaltungsmöglichkeit einer Koppeleinrichtung zum Koppeln des sitzteilseitigen Oberteils und des karosserieseitigen Unterteils der Horizontalfederungseinrichtung, wobei ein weiteres Koppelelement einer Koppelstellen-Lageverstelleinheit einseitig an dem sitzteilseitige Oberteil angelenkt angeordnet ist, und eine entsprechende Koppelstelle entlang einer Bahnkurve geführt werden kann.
- Figur 9: schematisch eine Ansicht eines Kraft-Weg-Diagramms bezüglich einer auf die Horizontalfederungseinrichtung wirkenden Hangabtriebskraft und einer hieraus resultierenden Auslenkung des sitzteilseitigen Oberteils der Horizontalfederungseinrichtung gemäß der in der Figur 8 gezeigten Ausgestaltung;
- Figur 10: schematisch eine Ansicht einer vierten Ausgestaltungsmöglichkeit einer Koppeleinrichtung;
- Figur 11: schematisch eine Ansicht einer fünften Ausgestaltungsmöglichkeit einer Koppeleinrichtung mit einem als Pneumatikfederungselement ausgestalteten deformierbaren Federungselement, welches in der Horizontalfederungseinrichtung verbaut werden kann;
- Figur 12A: schematisch eine Ansicht einer sechsten Ausgestaltungsmöglichkeit einer Koppeleinrichtung mit einer als Pneumatikfederungselement ausgestalteten Nulllagenkorrektureinheit, welche in der Horizontalfederungseinrichtung verbaut werden kann, hinsichtlich einer auf die Fahrzeuglängsrichtung bezogenen Nulllagenposition des Sitzteils des Fahrzeugsitzes ;
- Figur 12B: schematisch eine weitere Ansicht der Nulllagenkorrektureinheit hinsichtlich einer ersten Korrekturlage bezogen auf die Nulllagenposition aus der Figur 12A;
- Figur 12C: schematisch eine weitere Ansicht der Nulllagenkorrektureinheit hinsichtlich einer weiteren Korrekturlage bezogen auf die Nulllagenposition aus der Figur 12A;
- Figur 12D: schematisch eine Ansicht eines auf die Nullalgenkorrektureinheit aus den Figuren 12A bis 12C bezogenen Kraft-Weg-Diagramms bezüglich einer auf die Horizontalfederungseinrichtung wirkenden Hangabtriebskraft und einer hieraus resultierenden Auslenkung des sitzteilseitigen Oberteils der Horizontalfederungseinrichtung;
- Figur 12E: schematisch eine Ansicht eines auf die Figuren 12A bis 12C bezogenen KraftWeg-Diagramms bezüglich einer auf die Horizontalfederungseinrichtung wirkenden Hangabtriebskraft und einer hieraus resultierenden Auslenkung des sitzteilseitigen Oberteils der Horizontalfederungseinrichtung gemäß der in der Figur 8 gezeigten Ausgestaltung;
- Figur 13: schematisch eine Ansicht einer möglichen Optimierungsvorrichtung hinsichtlich der Horizontalfederungseinrichtung
- Figur 14A: schematisch eine Ansicht einer siebten Ausgestaltungsmöglichkeit; und
- Figur 14B: schematisch eine weitere Ansicht der siebten Ausgestaltungsmöglichkeit aus der Figur 14A.

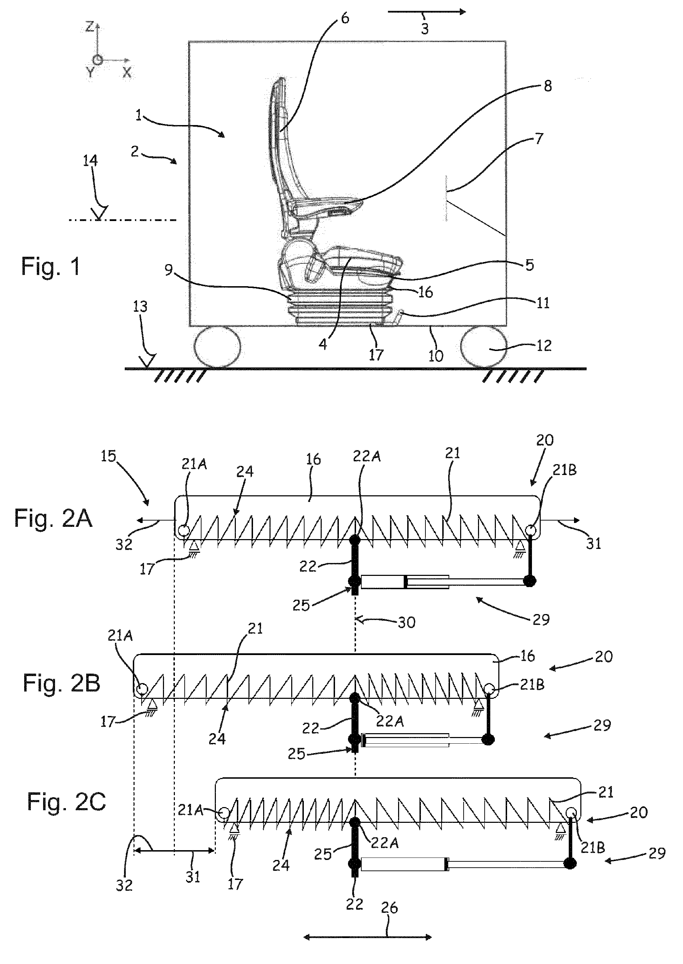

Der in der Figur 1 schematisch dargestellte Fahrzeugsitz 1 ist in einem Fahrzeug 2 in Vorwärtsfahrtrichtung 3 ausgerichtet montiert angeordnet. Insofern ist er in der Fahrzeuglängsrichtung X orientiert angeordnet und weist eine sich in Fahrzeugbreitenrichtung Y und in Fahrzeuglängsrichtung X erstreckenden Sitzfläche 4 eines Sitzteils 5 sowie ein sich in Fahrzeughöhenrichtung Z erstreckendes Rückenlehnenteil 6 auf, die bevorzugt gegenüber dem Sitzteil 5 schwenkbar angeordnet ist. Der Fahrzeugsitz 1 ist vor einem Lenkrad 7 platziert, welches von einer auf dem Fahrzeugsitz sitzenden Person gut bedienbar ist. Weiterhin sind an dem Fahrzeugsitz 1, insbesondere an dessen Rückenlehnenteil 6, mindestens eine Armauflage 8 angeordnet, um den Fahrkomfort der Person zu erhöhen.

Darüber hinaus weist der Fahrzeugsitz 1 noch einen Sitzunterbau 9 auf, mittels welchem der Fahrzeugsitz 1 an einer Karosserie 10 des Fahrzeuges 2 befestigt ist. Am Sitzunterbau ist noch ein Betätigungshebel 11 einer Verschiebeeinrichtung (nicht gezeigt) zu erkennen, mittels welcher der Fahrzeugsitz 1 horizontal gemäß der Fahrzeuglängserstreckung X verlagert werden kann, wenn die Verschiebeeinrichtung durch Betätigen des Betätigungshebels 11 entriegelt wird. Das in der Figur 1 dargestellte Fahrzeug 2 steht mit seinen Rädern 12 (hier nur exemplarisch beziffert) auf einem Untergrund 13, und ist bezogen auf diesen Untergrund 13 fluchtend zu einer fiktiven Horizontalebene 14 ausgerichtet, so dass auch der Fahrzeugsitz 1 und insbesondere das Sitzteil 5 gegenüber dieser fiktiven Horizontalebene 14 nicht geneigt ist.

Der Sitzunterbau 9 weist des Weiteren eine Vielzahl an nicht weiter gezeigten Federungs- und/oder Dämpfungseinrichtungen auf, so dass insbesondere das Sitzteil 5 gegenüber der Karosserie 10 gut gefedert bzw. gedämpft in dem Fahrzeug 2 angeordnet ist, wodurch ein besonders hoher Fahrkomfort für die Person, welche auf dem Fahrzeugsitz 1 sitzt, erzielt werden kann. Die Federungseinrichtungs- und/oder Dämpfungseinrichtungen können den Fahrzeugsitz 1 insbesondere in Horizontalrichtung gemäß der Fahrzeuglängsrichtung X und/oder der Fahrzeugbreitenrichtung Y wie auch in Vertikalrichtung gemäß der Fahrzeughöhenrichtung Z federn bzw. dämpfen.

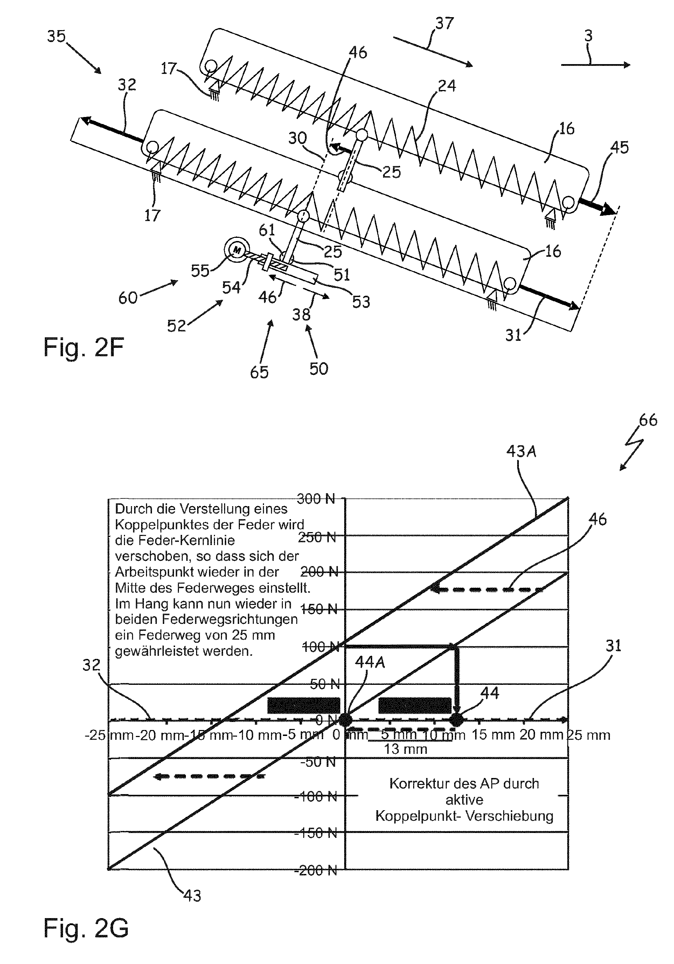

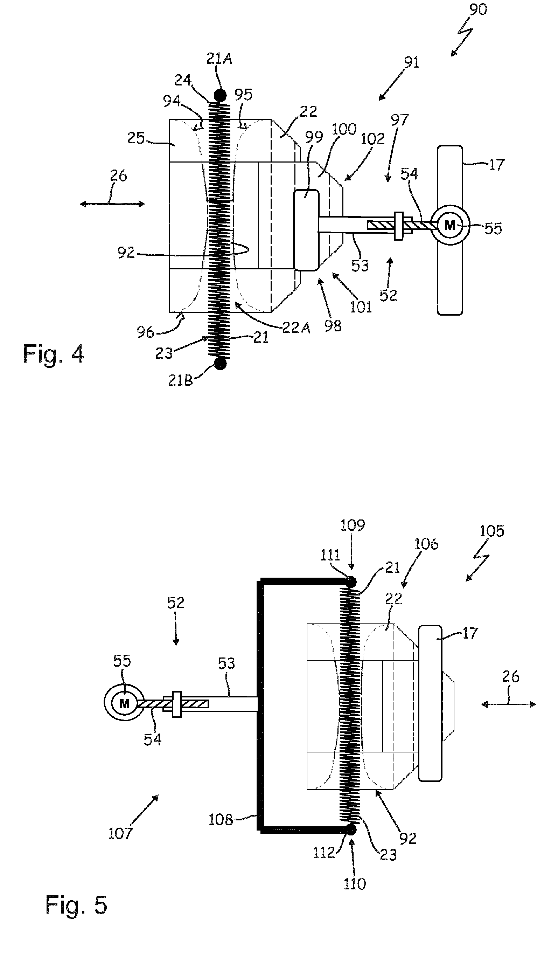

Insbesondere umfasst der Sitzunterbau 2 eine in den Figuren 2A bis 2D und 2F in ihrer Grundfunktion prinzipiell dargestellte Horizontalfederungseinrichtung 15 mit einem sitzteilseitigen Oberteil 16 und mit einem karosserieseitigen Unterteil 17, zwischen denen alternativ ausgestaltete Koppeleinrichtungen 20, 91, 106, 121, 141, 161 (siehe insbesondere Figuren 4, 5, 8, 10, 11) derart wechselwirkend angeordnet werden können, dass speziell das sitzteilseitige Oberteil 16 relativ verlagerbar gegenüber dem karosserieseitigen Unterteil 17 gelagert ist.

Die in den Figuren 2A bis 2D und 2F nur vom Grundprinzip her gezeigte Horizontalfederungseinrichtung 15 umfasst eine Koppeleinrichtung 20, mittels welcher das sitzteilseitige Oberteil 16 gegenüber dem karosserieseitigen Unterteil 17 relativ verlagerbar gekoppelt ist.

Die Koppeleinrichtung 20 umfasst zumindest ein deformierbares Federungselement 21 und eine Lager- und Deformationseinrichtung 22, mittels welcher dieses deformierbare Federungselement 21 deformiert werden kann, sobald es zu einer horizontalen Schwingungsanregung kommt.

Hierbei ist das deformierbare Federungselement 21 in einem ersten Anbringungsbereich 21 A und in einem zweiten Anbringungsbereich 21 B ortsfest an dem sitzteilseitigen Oberteil 16 befestigt, wobei das deformierbare Federungselement 21 in einem Lagerbereich 22A mit der Lager- und Deformationseinrichtung 22 wirkverbunden ist.

Das deformierbare Federungselement 21 ist nach den Darstellungen gemäß der Figuren 2A bis 2F und 2D in diesem Ausführungsbeispiel lediglich schematisch als Schraubenfederelement 23 dargestellt.

Es versteht sich, dass das deformierbare Federungselement 21 auch durch anders wirkende bzw. anders gestaltete Federungselemente realisiert sein kann, wie nachstehend beispielhaft noch beschrieben ist.

Dementsprechend kann die Lager- und Deformationseinrichtung 22 ebenfalls unterschiedlich ausgestaltet sein, wobei beispielhaft bevorzugte Ausführungsmöglichkeiten der Lager- und Deformationseinrichtung 22 später noch ausführlicher beschrieben sind.

Das deformierbare Federungselement 21 stellt hierbei ein erstes Koppelelement 24 und die Lager- und Deformationseinrichtung 22 stellt ein weiteres Koppelelement 25 der Koppeleinrichtung 20 dar, um das sitzteilseitige Oberteil 16 relativ verlagerbar gegenüber dem karosserieseitigen Unterteil 17 fluchtend zur fiktiven Horizontalebene 14 und in Horizontalfederungsrichtung 26 zu lagern.

Darüber hinaus ist die in den Figuren 2A bis 2F und 2D schematisch gezeigte Horizontalfederungseinrichtung 15 noch mit einer Dämpfereinrichtung 29 ausgerüstet, wobei dies jedoch nicht zwingend erforderlich ist. Insofern ist in den nachfolgend noch beschriebenen Ausgestaltungsmöglichkeiten auf eine explizite Darstellung einer solchen Dämpfereinrichtung 29 verzichtet. Diese Dämpfereinrichtung 29 wirkt schwingungsdämpfend zwischen dem als deformierbares Federungselement 21 ausgestalteten ersten Koppelelement 24 und dem als Lagerungs- und Deformationseinrichtung 22 ausgestalteten weiteren Koppelelement 25 in an sich bekannter Weise, so dass die Dämpfereinrichtung 29 und deren Wirkungsweise nicht weiter erläutert werden.

Die vorliegende Horizontalfederungseinrichtung 15 zeichnet sich durch eine Gesamtfederungsamplitude von 50 mm aus, wobei insbesondere das sitzteilseitige Oberteil 16 ausgehend von einer Horizontal-Nulllagenposition 30 in Bezug auf die Fahrzeuglängsrichtung X in Vorwärtsfahrtrichtung 3 einen translatorischen vorderen Federungsweg von +25 mm und ausgehend von dieser Horizontal-Nulllagenposition 30 entgegen der Vorwärtsfahrtrichtung 3 einen translatorischen hinteren Federungsweg 32 von -25 mm bereitstellen kann.

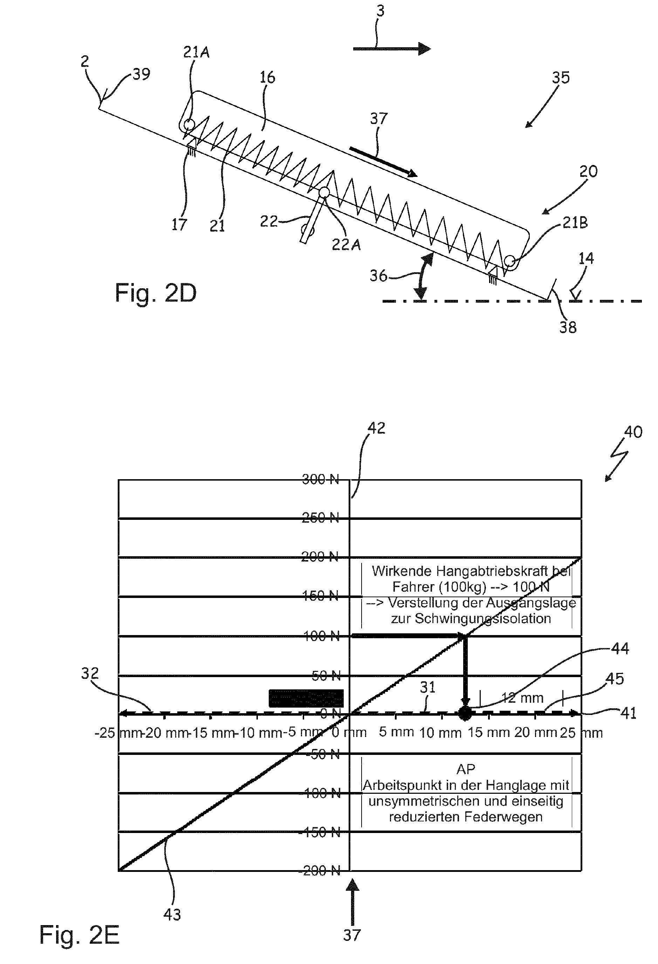

Während die Darstellungen gemäß der Figuren 2A bis 2C das Fahrzeug 2 und damit auch die Bauteile der Horizontalfederungseinrichtung 15 zur fiktiven Horizontalebene 14 fluchtend ausgerichtet darstellen, zeigen die Darstellungen gemäß der Figuren 2D und 2F die Horizontalfederungseinrichtung 15 in einer gegenüber der fiktiven Horizontalebene 14 geneigten Ausrichtung 35. Diese geneigte Ausrichtung 35 kommt beispielsweise dadurch zustande, wenn das Fahrzeug 2 in Vorwärtsfahrtrichtung 3 bergab, also runterwärts, fährt bzw. in einem unebenen Gelände auf einem entsprechend geneigten Untergrund steht. Insofern ist das Fahrzeug 2 gegenüber der fiktiven Horizontalebene 14 um einen Neigungswinkel 36 geneigt (Figuren 2D und 2F).

Dementsprechend ist die gesamte Horizontalfederungseinrichtung 15 bei der geneigte Ausrichtung 35, beispielsweise bei einem entsprechenden Gefälle in einer Hanglage, durch die auf dem Fahrzeugsitz 1 sitzenden Person vorbelastet, so dass sich hierdurch eine Arbeitspunktverschiebung bzw. eine Verschiebung des sitzteilseitigen Oberteils 16 aus der Horizontal-Nulllagenposition 30 heraus ergibt, wie dies beispielsweise hinsichtlich der Darstellung gemäß der Figur 2F gut illustriert dargestellt ist.

Jedenfalls bedingt die auf dem Fahrzeugsitz 1 lastende Gewichtskraft je nach Neigungswinkel 36 und Personengewicht unterschiedliche Hangabtriebskräfte 37 an dem Sitzteil 5 bzw. an dem sitzteilseitigen Oberteil 16 der Horizontalfederungseinrichtung 15. Wird das sitzteilseitige Oberteil 16 hierdurch nun aus der Horizontal-Nulllagenposition 30 ausgelenkt, besteht die Gefahr, dass das sitzteilseitige Oberteil 16 gegen einen der Endanschläge 38 oder 39 stößt, da sich der ursprüngliche vordere Federungsweg 31 in diesem Ausführungsbeispiel zwangsläufig von vormals 25 mm auf nunmehr nur noch 12 mm reduziert, wie aus der schematischen Darstellung des Kraft-Weg-Diagramms 40 gemäß der Figur 2E gut ersichtlich ist.

Das Kraft-Weg-Diagramm 40 illustriert hierbei die Federrate über den Federweg, wobei es an seiner Abszisse 41 sowohl den vorderen Federungsweg 31 als auch den hinteren Federungsweg 32 und an seiner Ordinate 42 die Federkräfte des deformierbaren Federungselements 21 bzw. die auf das sitzteilseitige Oberteil 16 wirkenden Hangabtriebskräfte 37 aufzeigt. Beispielsweise betragen die Hangabtriebskräfte 37 bei einem Personengewicht von 100 kg entsprechend 100 Newton gemäß dem Kraft-Weg-Diagramm 40. Im Zusammenhang mit der linearen Federkennlinie 43 ergibt sich nun eine Verschiebung des Arbeitspunktes 44 von 13 mm, so dass hinsichtlich des vorderen Federungswegs 31 lediglich ein Restfederweg 45 von 12 mm verbleibt.

Kommt es nun zu einer Anregung der Horizontalfederungseinrichtung 15, besteht die Gefahr, dass dieser Restfederungsweg 45 von 12 mm zur Kompensation nicht ausreicht, so dass die Horizontalfederungseinrichtung 15 an den vorderen Endanschlag 38 anschlägt, wodurch der Federungskomfort der auf dem Fahrzeugsitz 1 sitzenden Person kritisch beeinträchtigt wird, was nicht erwünscht ist.

Um dies zu verhindern, zeichnet sich die vorliegende Horizontalfederungseinrichtung 15 bzw. die diesbezügliche Koppeleinrichtung 20 dadurch aus, dass das weitere Koppelelement 25, also die Lager- und Deformationseinrichtung 22, relativ verlagerbar gegenüber und an dem karosserieseitigen Unterteil 17 angeordnet ist, wie dies beispielhaft und schematisch nach der Darstellung gemäß der Figur 2F dargestellt ist. Die obere Teildarstellung zeigt die Koppeleinrichtung 20 in einer noch nicht korrigierten Lage, während die untere Teildarstellung die Koppeleinrichtung 20 in einer korrigierten Lage zeigt.

Mittels der erfindungsgemäßen Koppeleinrichtung 20 gelingt es, das sitzteilseitige Oberteil 16 gemäß der Korrekturverschiebung 46 entgegen die Hangabtriebskräfte 37 wieder bis in die Horizontal-Nulllagenposition 30 hinein zu verschieben, so dass aufgrund dessen mittels der Horizontalfederungseinrichtung 15 sowohl der volle vordere Federungsweg 31 als auch der volle hintere Federungsweg 32 zur Verfügung stehen.

Eine diesbezüglich erfindungsgemäße Verlagerung des weiteren Koppelelements 25 gegenüber dem karosserieseitigen Unterteil 17 wird hierbei mittels einer Koppelstellen-Lageverstelleinheit 50 erzielt, welche zwischen dem weiteren Koppelelement 25 und dem karosserieseitigen Unterteil 17 wirkend angeordnet ist, so dass eine Koppelstelle 51 zwischen dem weiteren Koppelelement 25 und dem karosserieseitigen Unterteil 17 relativ zu diesem karosserieseitigen Unterteil 17 verlagert werden kann.

In diesem Ausführungsbeispiel ist die Koppelstellen-Lageverstelleinheit 50 in Gestalt einer Linearverstelleinrichtung 52 ausgebildet, wobei die Linearverstelleinrichtung 52 ein Gehäuseelement 53 und ein in dieses Gehäuseelement translatorisch hinein bzw. heraus verlagerbares Spindelelement 54 umfasst.

Die Linearverstelleinrichtung 52 ist mit ihrem Gehäuseelement 53 mittels der Koppelstelle 51 an dem weiteren Koppelelement 25 befestigt, wohingegen sie mit ihrem Spindelelement 54 an dem karosserieseitigen Unterteil 17 angelenkt ist.

Zum Verstellen des Spindelelements 54 gegenüber dem Gehäuseelement 53 verfügt die Linearverstelleinrichtung 52 noch über einen E-Motor 55, der spindelelementseitig vorgesehen ist.

An dieser Stelle sei explizit noch darauf hingewiesen, dass die Linearverstelleinrichtung 52 konstruktiv auf unterschiedliche Weise realisiert sein kann. Hierzu existieren aus dem Stand der Technik hinsichtlich der Linearverstelleinrichtung 52 eine Vielzahl an alternativen Ausführungsformen, wobei die ein oder andere nachfolgend noch in Zusammenhang mit anderen möglichen Ausgestaltungen erläutert ist.

Jedenfalls kann mit der Linearverstelleinrichtung 52 der Koppelstellen-Lageverstelleinheit 50 die Korrekturverschiebung 46 derart vorgenommen werden, dass diese Koppelstellen-Lageverstelleinheit 50 sogleich eine Nulllagenkorrektureinheit 60 zum Anpassen der Horizontal-Nulllagenposition 30 der Horizontalfederungseinrichtung 15 darstellt.

Die Nulllagenkorrektureinheit 60 ist hierbei vorzugsweise derart aufgebaut, dass das weitere Koppelelement 25 und das karosserieseitige Unterteil 17 in einer gemeinsamen Unterteilkoppelstelle 61 derart miteinander gekoppelt sind, dass die Lage der Unterteilkoppelstelle 61 relativ zu dem karosserieseitigen Unterteil 17 variabel einstellbar ist.

Das bedeutet, dass der Abstand zwischen der Koppelstelle 51 bzw. der Unterteilkoppelstelle 61 und dem karosserieseitigen Unterteil 17 bedarfsweise variiert werden kann.

Bei geeigneter Ausgestaltung der Koppeleinrichtung 20 kann diese kumulativ oder alternativ zu der Nulllagenkorrektureinheit 60 noch eine Federkennlinienanpassungseinheit 65 zum Anpassen der linearen Federkennlinie 43 des deformierbaren Federelements 21 umfassen.

Dementsprechend ist auch diese Federkennlinienanpassungseinheit 65 derart ausgestaltet, dass das weitere Koppelelement 25 und das karosserieseitige Unterteil 17 in einer gemeinsamen Unterteilkoppelstelle 61 derart miteinander gekoppelt sind, dass die Lage der Unterteilkoppelstelle 61 relativ zu dem karosserieseitigen Unterteil variabel einstellbar ist.

Die Wirkungsweise einer derartigen Koppelstellen-Lageverstelleinheit 50 ist nach der Darstellung des in der Figur 2G illustrierten Kraft-Weg-Diagramms 66 gezeigt, wobei die lineare Federkennlinie 43 durch die entsprechende Korrekturverschiebung 46 von 13 mm derart gemäß der verschobenen linearen Federkennlinie 43A verschoben ist, dass trotz der wirkenden Hangabtriebskräfte 37 von 100 Newton ein korrigierter Arbeitspunkt 44A auch durch den durch die Abszisse 41 und die Ordinate 42 gebildeten Nullpunkt hindurch verläuft.

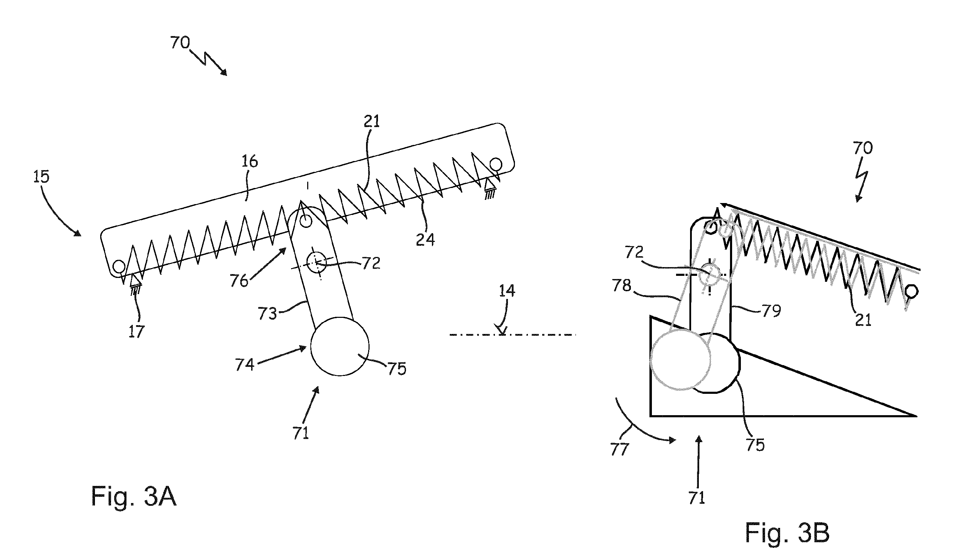

Die in den Figuren 3A und 3B gezeigte weitere mögliche Lageverstellmechanik 70 umfasst ein Pendeleinrichtung 71, welche um eine Pendelachse 72 drehbeweglich gelagert ist, um etwaige durch ein Gefälle verursachte Hangabtriebskräfte mittels einer Pendelfunktion ausgleichen zu können. Die Pendeleinrichtung 71 umfasst ein Pendelarmelement 73, welches an seinem einen Ende 74 ein Pendelgewichtelement 75 aufweist. Mit seinem anderen Ende 76 ist es an dem deformierbaren Federungselement 21 bzw. dem ersten Koppelelement 24 der Horizontalfederungseinrichtung 15 befestigt. Befindet sich nun das Fahrzeug 2 nun in einer Hanglage bzw. in der geneigten Ausrichtung 35, in welcher insbesondere das sitzteilseitige Oberteil 16 gegenüber der fiktiven Horizontalebene 14 geneigt ist (hinsichtlich Figur 3A spiegelbildlich dargestellt), dreht die Pendeleinrichtung 71 aufgrund des Pendelgewichtelements 75 um die Pendelachse 72 gemäß der Drehrichtung 77 (vgl. Figur 3B) aus einer zuvor ausgelenkten Lage 78 heraus und wieder in eine Vertikalpendellage 79 hinein, wodurch die Federvorspannung des deformierbaren Federungselements 21 erhöht wird, so dass insbesondere das sitzteilseitige Oberteil 16 wieder in die Horizontal-Nulllagenposition 30 hinein verlagert wird, so dass beidseits dieser Horizontal-Nulllagenposition 30 der gesamte vordere Federungsweg 31 sowie der gesamte hintere Federungsweg 32 an der Horizontalfederungseinrichtung 15 zur Verfügung steht.

Insofern ist mit der vorliegenden Pendeleinrichtung 71 eine konstruktiv einfache Ausgestaltungsmöglichkeit einer passiven Nulllagenkorrektureinheit bzw. einer passiven Federkennlinienanpassungseinheit realisiert.

Durch die Pendeleinrichtung 71 und der diesbezüglichen Hebelübersetzung hinsichtlich des Pendelarmelements 73 kann selbst mit geringen Gewichten hinsichtlich des Pendelgewichtelements 75 ein langfristiges Annähern an einem Endanschlag entgegengewirkt werden. Durch die Pendeleinrichtung 71 wird vorteilhafterweise die Federvorspannung erhöht und damit das gesamte System wieder in die Federwegsmitte bzw. in die Horizontal-Nulllagenposition hinein positioniert.

Durch eine vorzugsweise vorgesehene zusätzliche Frequenzselektion im Pendelarmelement 73 können hochfrequente Anregungseinleitungen von der Neigung des Fahrzeugsitzes 1 differenziert betrachtet werden. Langanhaltende Beschleunigungen, wie zum Beispiel beim Bremen oder Beschleunigen, bewirken ebenfalls eine Konstantenverstellung, wodurch gegen diese Bewegung mehr Federkraft aufgebracht wird. Die Frequenzselektion hat den besonderen Vorteil, dass bei hochfrequenter Anregung immer noch Ruhe im System gehalten werden kann, wodurch insbesondere ein Aufschaukeln der Horizontalfederungseinrichtung 15 unterbunden ist.

Die Pendeleinrichtung 71 kann auch elektronisch, beispielsweise mit Beschleunigungssensoren, realisiert werden.

Die entsprechende Vorspannung kann auch mittels einer Linearverstelleinrichtung realisiert werden.

Die Pendeleinrichtung 71 ist idealerweise bedämpft, so dass diese sich nicht bei jeder Anregung um die Pendelachse 72 bewegt.

Eine mögliche Auslegung der Pendeleinrichtung 71 sieht bei einem 20%-Gefälle bezüglich einer Hanglage etwa vor, dass entsprechend mit 20% einer Auflast gegengewirkt wird, was bei einer 75 kg schweren Person 15 kg ausmacht, welches gleichbedeutend mit 150 Newton ist. Insofern müsste bei einem 20%-Gefälle das Pendelarmelement 73 eine Drehung um 11,3° um die Pendelachse 72 durchführen, wobei hinsichtlich einer progressiven Federkennlinie bei ca. 20 mm etwa 150 Newton wirken. Hieraus resultiert eine Schenkellänge: cos (11,3°) = 20 mm/s = 20,40 mm. Das Drehmoment hinsichtlich des Pendelarmelements 73 beläuft sich auf M=F * I = 0,6 Nm, wobei der Höhenverzug durch die Kreisbahn vernachlässigt ist. Das Pendelarmelement 73 müsste zwischen der Pendelachse 72 und dem ersten Ende 74 etwa mit einem Gewicht von 3 kg ausgerüstet sein, wodurch 29,4 Newton erzielt werden können, bei einer Schenkellänge von 104,0 mm. Umfasst das Pendelarmelement 73 zwischen der Pendelachse 72 und dem ersten Ende 74 ein Gewicht von 5 kg, reduziert sich die Schenkellänge auf 62,4 mm. Ein diesbezüglicher Schenkel könnte auch als Wellenelement mit Exzenter ausgeführt werden.

Hinsichtlich der in der Figur 4 detaillierter dargestellten ersten alternativen Ausgestaltung 90 einer weiteren Koppeleinrichtung 91, welche in der zuvor beschriebenen Horizontalfederungseinrichtung 15 des Fahrzeugsitzes 1 (siehe Figur 1) eingebaut werden kann, erkennt man gut den detaillierteren Aufbau der Lager- und Deformationseinrichtung 22, mittels welcher das deformierbare Federungselement 21 deformiert werden kann.

Die Lager- und Deformationseinrichtung 22 weist einen Aufnahmeraum 92 auf, in welchem das deformierbare Federungselement 21 quer verlaufend zur Horizontalfederungsrichtung 26 angeordnet ist.

Der Aufnahmeraum 92 zeichnet sich neben seiner gegenüber der Horizontalfederungsrichtung 26 quer verlaufenden Ausrichtung noch insbesondere durch zwei aufeinander zugerichtete Anlageflächen 94 und 95 auf, die jeweils anders gekrümmt sind. Insofern ergeben sich hierdurch zwei asymmetrisch ausgestaltete aufeinander zugerichtete Anlageflächen 94 und 95, wodurch auch der Aufnahmeraum 92 zumindest hinsichtlich einer in Fahrzeuglängsrichtung X wirkenden Horizontalfederung asymmetrisch ausgestaltet ist. Dies liegt daran, dass eine Gewichtsverlagerung des Fahrers bezüglich Neigungen nach vorne bzw. nach hinten unterschiedlich ist.

Hinsichtlich einer in Fahrzeugbreitenrichtung Y arbeitenden Horizontalfederung wäre ein gattungsgemäßer Aufnahmeraum symmetrisch. Insofern wären die beiden Anlageflächen 94 und 95 auch gleich gekrümmt.

Der Aufnahmeraum 92 erstreckt sich quer zu der Horizontalfederungsrichtung länglich und an seinen beiden Längsenden ist der Aufnahmeraum 92 geöffnet, so dass das deformierbare Federungselement 21 über die seitlichen Randbereiche 96 (hier nur exemplarisch beziffert) der Lager- und Deformationseinrichtung 22 hinaus ragen kann.

Insofern stellen die beiden Anlageflächen 94 und 95 die für die Horizontalfederung ausschlaggebende Kontaktflächenanteile der Lagen- und Deformationseinrichtung 22 gegenüber dem deformierbaren Federungselement 21 dar.

Bei dem deformierbaren Federungselement 21 handelt es sich um das Schraubenfederungselement 23, wie bereits in den Figuren 2A bis 2D und 2F beschrieben, wobei das deformierbare Federungselement 21 einerseits in dem Lagerbereich 22A der Lager- und Deformationseinrichtung 22 und andererseits mittels der beiden Anbringungsbereiche 21A und 21 B an dem sitzteilseitigen Oberteil 16 (siehe beispielsweise Figur 2A) gelagert ist.

Wird nun das sitzteilseitige Oberteil 16 gegenüber dem karosserieseitigen Unterteil 17 oder umgekehrt ausgelenkt, wird das Schraubenfederungselement 23 durch die Lager- und Deformationseinrichtung 22 gekrümmt, wodurch entsprechende Rückstellkräfte erzeugt werden, um die Horizontalfederungseinrichtung 15 in ihre Horizontal-Nulllagenposition 30 zu überführen.

Die Lager- und Deformationseinrichtung 22 ist hierzu mittels einer weiteren Koppelstellen-Lageverstelleinheit 97 mittelbar an dem karosserieseitigen Unterteil 17 angekoppelt.

Die Koppelstellen-Lageverstelleinheit 97 ist hierbei als weitere Nulllagenkorrektureinheit 60 ausgestaltet, wobei die weitere Koppelstellen-Lageverstelleinheit 97 wieder die Linearverstelleinrichtung 52 umfasst, welche mit ihrem Gehäuseelement 53 an der Lager- und Deformationseinrichtung 22 gelagert ist und mittels des Spindelelements 54 direkt an dem karosserieseitigen Unterteil 17 angelenkt ist.

Eine Besonderheit dieser weiteren Koppeleinrichtung 91 ist darin zu sehen, dass die Koppelstellen-Lageverstelleinheit 97 quer zur Horizontalfederungsrichtung 26 verlagerbar angeordnet ist, so dass die Horizontalfederungseinrichtung 15 gegenüber dem karosserieseitigen Unterteil 17 auch quer zu dieser Horizontalfederungsrichtung 26 verlagert werden kann. Hierzu ist zumindest in diesem Ausführungsbeispiel das Gehäuseelement 53 mittels einer Kulissenführung 98 an der Lager- und Deformationseinrichtung 22 gelagert, wobei an dem Gehäuseelement 53 hierzu ein Kulissensteinelement 99 und an der Lager- und Deformationseinrichtung 22 eine entsprechende Kulissennut 100 vorgesehen ist, in welcher das Kulissensteinelement 99 in Bezug auf die Horizontalfederungsrichtung 26 translatorisch verlagerbar gelagert ist.

Die Kulissenführung 98 verkörpert insofern eine etwa anders gestaltete Koppelstelle 101 der weiteren Koppelstellen-Lageverstelleinheit 97 bzw. eine entsprechend anders ausgestaltete Unterteilkoppelstelle 102 der weiteren Nulllagenkorrektureinheit 60, wobei die Koppelstelle 101 bzw. die Unterteilkoppelstelle 102 mittels der Koppelstellen-Lageverstelleinheit 97 gegenüber dem karosserieseitigen Unterteil 17 verlagert werden kann.

Diese Kulissenführung 98 stellt im Sinne vorliegender Erfindung also die Koppelstelle 101 zwischen der Lager- und Deformationseinrichtung 22 und dem karosserieseitigen Unterteil 17 dar, der mittels der Koppelstellen-Lageverstelleinheit 97 gegenüber dem karosserieseitigen Unterteil 17 verstellt werden kann.

Insofern ist wiederum das weitere Koppelelement 25 in Gestalt der Lager- und Deformationseinrichtung 22 relativ verlagerbar gegenüber und an dem karosserieseitigen Unterteil 17 angeordnet. Somit ist klar, dass das zweite Koppelelement 25 in Horizontalfederungsrichtung 26 entweder auf das karosserieseitige Unterteil 17 zu oder von dem karosserieseitigen Unterteil 17 fortbewegt werden kann, je nachdem, wie die Koppelstellen-Lageverstelleinheit 97 betätigt wird. Hierdurch kann dann die Lage insbesondere des sitzteilseitigen Oberteils 16 gegenüber der Horizontal-Nulllagenposition 30 entsprechend eingestellt werden, so dass die Horizontalfederungseinrichtung 15 in ihrem optimalen Arbeitsbereich arbeiten kann.

Bei der in der Figur 5 gezeigten zweiten alternativen Ausgestaltung 105 einer weiteren Koppeleinrichtung 106 ist das karosserieseitige Unterteil 17 der Horizontalfederungseinrichtung 15 unmittelbar fest an der Lager- und Deformationseinrichtung 22 befestigt.

Das deformierbare Federungselement 21 ist wieder als Schraubenfederungselement 23 in dem Aufnahmeraum 92 der Lager- und Deformationseinrichtung 22 angeordnet.

Auch verfügt diese weitere Koppeleinrichtung 106, wie bereits vorstehend erläutert, wieder über eine Koppelstellen-Lageverstelleinheit 107 in Gestalt der Linearverstelleinrichtung 52, wobei die Koppelstellen-Lageverstelleinheit 107 bzw. die Linearverstelleinrichtung 52 zusätzlich über ein Gabelelement 108 verfügt, welches mit beiden Enden 109 und 110 des deformierbaren Federungselements 21 wirkverbunden ist. An den beiden Enden 109 bzw. 110 befinden sich die Koppelstellen 111 bzw. 112 zwischen dem deformierbaren Federungselement 21 und dem sitzteilseitigen Oberteil 16 (vgl. beispielsweise Figur 2A).

Die weitere Koppenstell-Lageverstelleinheit 107 ist in diesem Ausführungsbeispiel mit dem Spindelelement 54 der Linearverstelleinrichtung 52 unmittelbar an dem sitzteilseitigen Oberteil 116 fest angelenkt.

Insofern kann mittels dieser Koppelstellen-Lageverstelleinheit 107 ebenfalls eine Nulllagenkorrektureinheit 60 aber auch eine Federkennlinienanpassungseinheit 65 realisiert werden, da das deformierbare Federungselement 21 mittels der Linearverstelleinrichtung 52 deformiert werden kann. Insofern können die beiden Koppelstellen 111 und 112 synchron gegenüber dem sitzteilseitigen Oberteil 16 (vgl. beispielsweise Figur 2A) verlagert werden, um eine Nulllagenkorrektur vorzunehmen und/oder die Federkennlinie zu ändern.

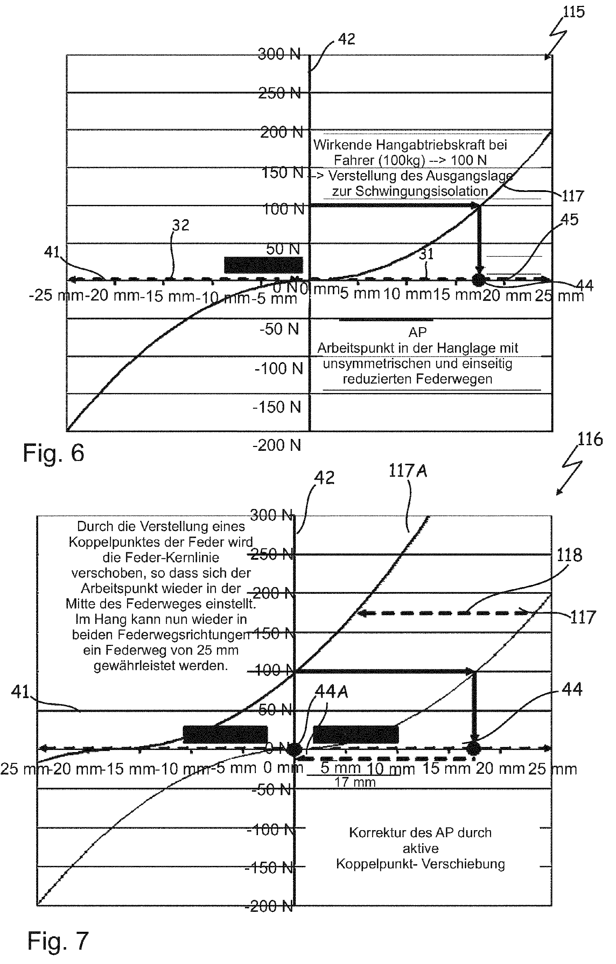

Dies ist auch mit den beiden weiteren in den Figuren 6 und 7 gezeigten Kraft-Weg-Diagrammen 115 (siehe Figur 6) und 116 (siehe Figur 7) gezeigt.

Während das Kraft-Weg-Diagramm 115 hinsichtlich der beiden Ausgestaltungen 90 bzw. 105 die Federrate über den Federweg zeigt, zeigt das Kraft-Weg-Diagramm 116 entsprechend die Federrate über den Federweg mit aktiver Korrektur der Ausgangslage.

Das Kraft-Weg-Diagramm 115 illustriert also die Federrate über den Federweg, wobei es an seiner Abszisse 41 sowohl den vorderen Federungsweg 31 als auch den hinteren Federungsweg 32 und an seiner Ordinate 42 die Federkräfte des deformierbaren Federungselements 21 bzw. die auf das sitzteilseitige Oberteil 16 wirkenden Hangabtriebskräfte aufzeigt. Beispielsweise betragen die Hangabtriebskräfte 37 bei einem Personengewicht von 100 kg entsprechend 100 Newton. Im Zusammenhang mit einer progressiven Federkennlinie 117 ergibt sich nun eine Verschiebung des Arbeitspunktes 44 von 17 mm, so dass hinsichtlich des vorderen Federungswegs 31 lediglich ein Restfederweg 45 von 8 mm verbleibt.

Die Wirkungsweise der Koppelstellen-Lageverstelleinheit 107 ist nach der Darstellung des in der Figur 7 illustrierten Kraft-Weg-Diagramms 116 gezeigt, wobei die progressive Federkennlinie 117 durch eine entsprechende Korrekturverschiebung 118 von 17 mm derart gemäß der verschobenen progressiven Federkennlinie 117A verschoben ist, dass trotz wirkender Hangabtriebskräfte von 100 Newton ein korrigierter Arbeitspunkt 44A auch durch den durch die Abszisse 41 und die Ordinate 42 gebildeten Nullpunkt hindurch verläuft. Zusätzlich wurde jedoch die progressive Federkennlinie 117 hinsichtlich ihrer Progression verändert.

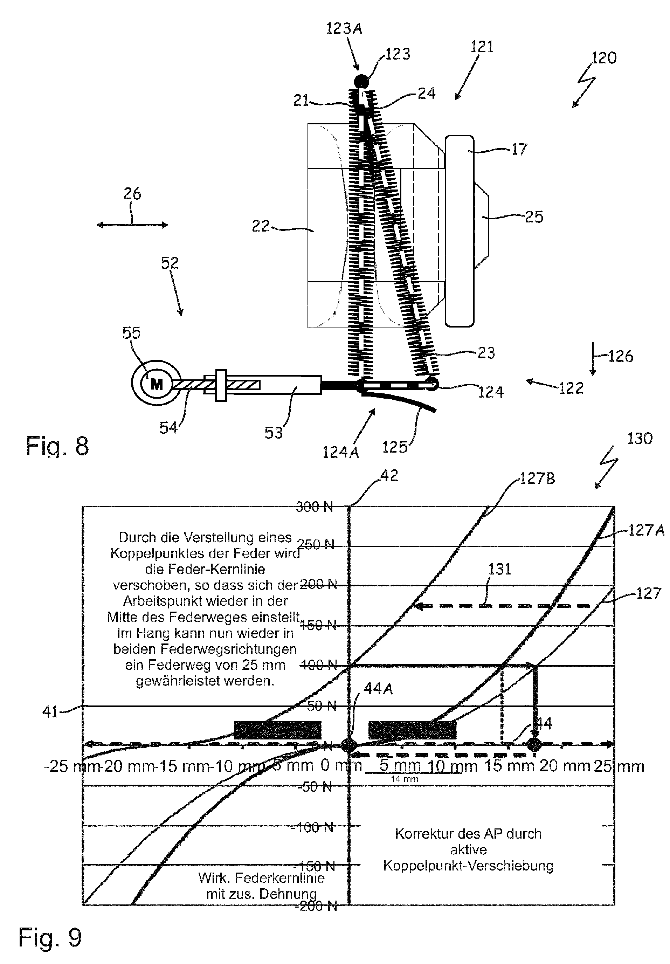

Die in der Figur 8 gezeigte dritte alternative Ausgestaltung 120 einer weiteren Koppeleinrichtung 121, mittels welcher die Horizontalfederungseinrichtung 15 ausgerüstet werden kann, umfasst ebenfalls wieder ein deformierbares Federungselement 21 in Gestalt eines Schraubenfederungselements 23 und eine Lager- und Deformationseinrichtung 22, in welcher das deformierbare Federungselement 21 quer zur Horizontalfederungsrichtung 26 angeordnet ist, wobei insbesondere die Lager- und Deformationseinrichtung 22 wieder identisch aufgebaut ist, wie hinsichtlich der zuvor erläuterten anderen alternativen Ausgestaltungen 90 bzw. 105, so dass diesbezüglich auf eine nochmalige Erläuterung des Aufbaus und der Wirkungsweise der Lager- und Deformationseinrichtung 22 verzichtet wird.

Die Lager- und Deformationseinrichtung 22 definiert auch hier wieder das zweite Koppelelement 25, welches unmittelbar an dem karosserieseitigen Unterteil 17 der Horizontalfederungseinrichtung 15 befestigt ist.

Darüber hinaus zeichnet sich diese dritte alternative Ausgestaltung 120 der weiteren Koppeleinrichtung 121 durch eine anders gestaltete Koppelstellen-Lageverstelleinheit 122 aus, bei welcher das erste Koppelelement 24 (Schraubenfederungselement 23) einerseits mit einer als ein Drehlager 123 ausgestaltete erste Koppelstelle 123A unmittelbar und andererseits mit einer als Linearlager 124 ausgestaltete zweite Koppelstelle 124A mittelbar über die Linearverstelleinrichtung 52 an dem sitzteilseitigen Oberteil 16 angekoppelt ist.

Während das erste Koppelelement 24 mittels der ersten Koppelstelle 123A zwar drehbeweglich aber fest an dem sitzteilseitigen Oberteil 16 der Horizontalfederungseinrichtung 15 befestigt ist, ist es hinsichtlich der zweiten Koppelstelle 124A mittels der Linearverstelleinrichtung 52 relativ verlagerbar gegenüber und an dem sitzteilseitigen Oberteil 16 befestigt, wobei das Linearlager 124 in diesem Ausführungsbeispiel eine gekrümmte Bahnkurve 125 aufweist.

Wird nun das Gehäuseelement 53 der Linearverstelleinrichtung 52 mittels des E-Motors 55 relativ gegenüber dem Spindelelement 54 der Linearverstelleinrichtung 52 gemäß der Horizontalfederungseinrichtung 26 bewegt, verschiebt sich die zweite Koppelstelle 124A nicht nur geradlinig fluchtend zur Horizontalfederungsrichtung 26, wie hinsichtlich der zuvor beschriebenen alternativen Ausgestaltungen 90, 105 oder 120, sondern sie bewegt sich zusätzlich entlang der gekrümmten Bahnkurve 125 auch noch mit einer Querverlagerungskomponente 126 entsprechend quer zu der Horizontalfederungsrichtung 26.

Hierdurch kann das Schraubenfederungselement 23 in Richtung seiner Längserstreckung zusätzlich gelängt werden, da sich die beiden Koppelstellen 123A und 124A zusätzlich quer zur Horizontalfederungsrichtung 26 voneinander entfernen, wodurch die entsprechende progressive Federkennlinie 127 des deformierbaren Federungselements 21 zusätzlich als veränderte progressive Federkennlinie 127A und des Weiteren noch als verlagerte und veränderte progressive Federkennlinie 127B verändert werden kann (vgl. Figur 9).

Mittels des Linearlagers 124 an der zweiten Koppelstelle 124A gelingt somit eine erweiterte Verstellung der zweiten Koppelstelle 124A, bei welcher rückführende Kräfte zusätzlich eingeprägt werden können. Je nach Form des Linearlagers 124 kann die Federsteifigkeit des Schraubenfederungselements 23 zusätzlich erhöht oder gemindert werden.

Vorteilhafterweise wird durch die zusätzliche Querverstellung der zweiten Koppelstelle 124A neben einer Nulllagenkorrektur auch ein Verspannen des Schraubenfederungselements 23 erreicht, wodurch eine steilere Federkennlinie erzielt werden kann.

Das Linearlager 124 bzw. dessen Bahnkurve kann beispielweise als Kulissenführungsnut ausgeformt sein, in welcher ein Gleitlagerelement geführt ist.

Alternativ zu der gekrümmten Bahnkurve 125 kann auch lediglich eine gegenüber der Horizontalfederungsrichtung 26 schräg angeordnete Bahnführung vorgesehen werden.

Insofern verkörpert die anders gestaltete Koppelstellen-Lageverstelleinheit 122 sowohl eine Nulllagenkorrektureinheit 60 als auch eine Federkennlinienanpassungseinheit 65.

Das in der Figur 9 entsprechend gezeigte Kraft-Weg-Diagramm 130 zeigt insofern die Federrate über den Federweg mit aktivierter Korrektur der Ausgangslage hinsichtlich der weiteren Koppeleinrichtung 121 gemäß der dritten alternativen Ausgestaltung 120 aus der Figur 8.

Die Wirkungsweise der anderen Koppelstellen-Lageverstelleinheit 122 ist nach der Darstellung des in der Figur 9 illustrierten Kraft-Weg-Diagramms 130 nochmals verdeutlicht, wobei die ursprüngliche progressive Federkennlinie 127 durch eine entsprechende Korrekturverschiebung 131 und einer Längung des Schraubenfederungselements 23 insgesamt von 17 mm derart gemäß der verschobenen und veränderten progressiven Federkennlinie 117B verschoben ist, dass trotz wirkender Hangabtriebskräfte ein korrigierter Arbeitspunkt 44A auch durch den durch die Abszisse 41 und die Ordinate 42 gebildeten Nullpunkt hindurch verläuft.

Durch das Linearlager 124 bzw. durch die gekrümmte Bahnkurve 125 lässt sich somit eine weitere Progression bzw. eine steilere Federkennlinie 127A erzielen, wodurch vorteilhafterweise der Weg der Korrekturverschiebung 131 reduziert werden kann, wodurch die Horizontalfederungseinrichtung 15 noch kompakter gebaut werden kann.

Alternativ zur gekrümmten Bahnkurve 125 könnte allgemein auch ein Drehlager in Form eines verstellbaren Hebelwerks vorgesehen sein, wodurch ein Gleiten bzw. Reiben vermieden wäre.

Die Kulissenform hat den weiteren Vorteil, dass durch die Kulissenführung die durch die Verstellung herbeigeführte Dehnung eliminiert werden kann.

Die einseitige Verstellung hat den Vorteil, dass keine Parallelführung der Linearverstellung erforderlich ist.

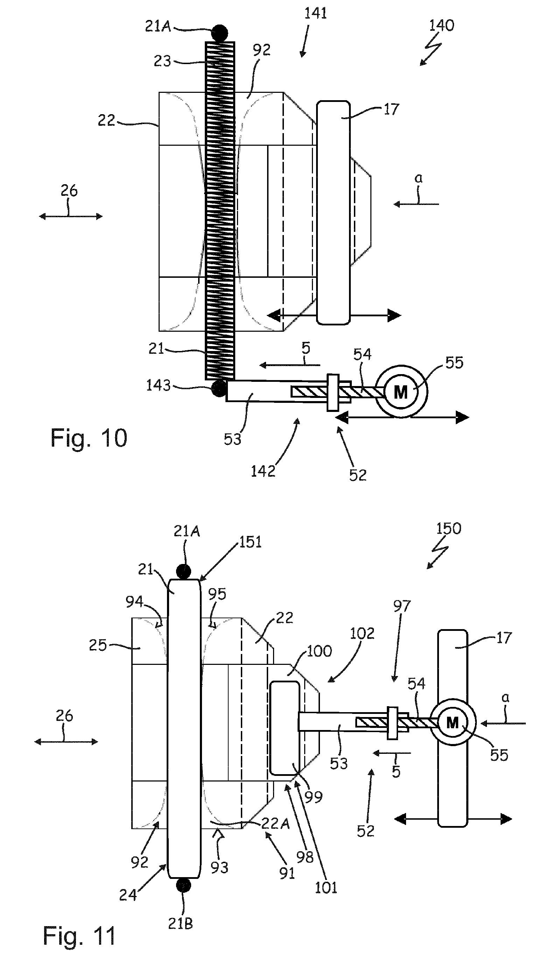

Die in der Figur 10 gezeigte vierte alternative Ausgestaltung 140 einer weiteren Koppeleinrichtung 141 zeichnet sich im Wesentlichen durch eine baugleiche Lage- und Deformationseinrichtung 22 aus, in welcher ein als Schraubenfederungselement 23 ausgebildetes deformierbares Federungselement 21 gelagert ist.

Das deformierbare Federungselement 21 ist einerseits mittels eines Anbringungsbereichs 21 A unmittelbar an dem karosserieseitigen Oberteil 16 (siehe beispielsweise Figur 2A) ortsfest befestigt. Andererseits ist es mittels einer Koppelstellen-Lageverstelleinheit 142 hinsichtlich einer gegenüber dem sitzteilseitigen Oberteil 16 verlagerbaren Koppelstelle 143 mittelbar, das heißt verlagerbar, an dem sitzteilseitigen Oberteil 16 gekoppelt.

Die Koppelstellen-Lageverstelleinheit 142 ist vorliegend wieder in Gestalt der Linearverstelleinrichtung 52 ausgebildet. Die Linearverstelleinrichtung 52 ist mit ihrem Gehäuseelement 53 mittels der Koppelstelle 143 an dem deformierbaren Federungselement 21 befestigt, wohingegen sie mit ihrem Spindelelement 54 an dem sitzteilseitigen Oberteil 16 angelenkt ist.

Die in der Figur 11 gezeigte fünfte alternative Ausgestaltung 150 ist vom Aufbau her im Wesentlichen identisch mit der in der Figur 4 gezeigten ersten alternativen Ausgestaltung 90, wobei hier jedoch das deformierbare Federungselement 21 als Pneumatikfederungselement 151 ausgestaltet ist, welches schlauchartig ausgebildet ist. Insofern wird hinsichtlich des genauen Aufbaus der fünften alternativen Ausgestaltung 150 auf die erste alternative Ausgestaltung 90 verwiesen und die entsprechenden Bezugszeichen verwendet, und nur die Unterschiede erläutert, um Wiederholungen zu vermeiden.

Das Pneumatikfederungselement 151 stellt insofern einen pneumatischen Muskel dar, so dass sich das Pneumatikfederungselement 151 aufgrund seiner hohen Flexibilität noch einfacher an die Form des Aufnahmebereichs 92 bzw. dessen diesbezügliche Anlagenfläche 94 und 95 anpassen kann.

Insbesondere sowohl hinsichtlich der in der Figur 10 gezeigten vierten alternativen Ausgestaltung 140 der weiteren Koppeleinrichtung 141 als auch hinsichtlich der in der Figur 11 gezeigten fünften alternativen Ausgestaltung 150 gilt, dass bei einer geringen Anregung, idealerweise eine gleichsinnige Ansteuerung einer Linearverstellung s mit der Beschleunigung a vorgenommen wird, wodurch die Federvorspannung in der Auslenkung eliminiert werden kann.

Hinsichtlich einer stärkeren Anregung wird eine gegensinnige Ansteuerung der Linearverstellung s zur Beschleunigung a angestrebt, wodurch eine verstärkte Federkennlinie eingestellt werden kann, um ein mögliches Anschlagen des sitzteilseitigen Oberteils 17 an Endanschlägen 38 bzw. 39 (siehe Figur 2D) vorzubeugen. Nach dem Abklingen der Beschleunigung a wird die Linearverstellung s in die Ausgangslage zurückgeführt, bevor die erhöhte Federvorspannung zu einem Rebound führen kann.

Hinsichtlich einer langfristigen Abweichung bezüglich einer geneigten Ausrichtung 35 (siehe etwa Figur 2D) kann eine konstante Linearverstellung vorgenommen werden, um den Hangabtriebskräften 37 (siehe etwa Figur 2D) entgegen zu wirken.

In beiden Fällen (alternative Ausgestaltungen 140 und 150) wird eine Änderung der rückführenden Kräfte zur Ausgangsstellung hin durch eine Linearverstellung der Koppelstelle 143 hinsichtlich des sitzteilseitigen Oberteils 16 bzw. 101 bzw. der Koppelstelle 101 hinsichtlich des karosserieseitigen Unterteils 17 erzielt.

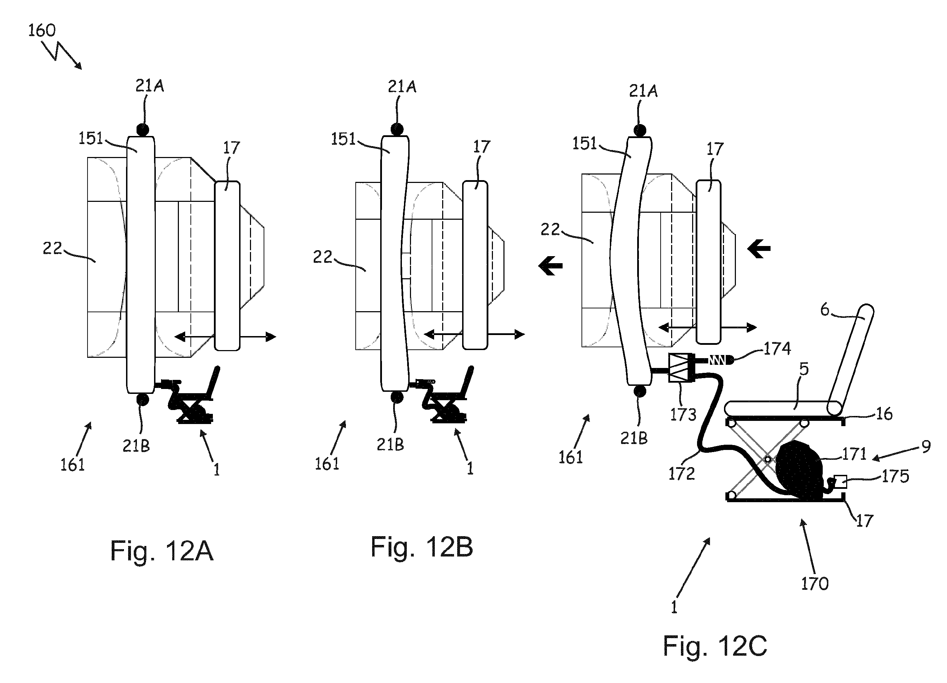

Hinsichtlich einer in den Figuren 12A bis 12C gezeigten sechsten alternativen Ausgestaltung 160 einer weiteren Koppeleinrichtung 161 ist auf eine Koppelstellen-Lageverstelleinheit, wie vorstehend beschrieben, verzichtet, so dass insbesondere eine diesbezügliche Nulllagenkorrektureinheit lediglich mittels des Pneumatikfederungselements 151 durchgeführt werden kann, jedoch mit einem geringen .

Eine Durchbiegung bzw. Dehnung des Pneumatikfederungselements 151 ist bei geringem Druck innerhalb des Pneumatikfederungselements 151 leichter, wodurch eine geringere Federkonstante bereitgestellt werden kann.

Mit steigender Auslenkung wird der Druck und somit die Gegenkraft des Pneumatikfederungselements 151 erhöht, um einem Ausschlagen insbesondere des sitzteilseitigen Oberteils 16 der Horizontalfederungseinrichtung 15 in gewünschter Weise entgegenzuwirken. Bei einem Rückweg wird der Druck abgelassen, so dass die rückführende Kraft reduziert und somit ein Aufschaukeln durch einen Rebound verhindert werden kann.

Einem langfristigen Abweichen aus der Horizontal-Nulllagenposition 30 heraus, etwa bei einem Betrieb hinsichtlich Berg- und Talfahrten des Fahrzeugs 2, kann durch kontinuierlich höherem Druck entgegengewirkt und somit ein ausreichender Federweg für die Einstellung gewährleistet werden. Insofern erzielt man eine steigende Federkennlinie. Insofern kann mittels der weiteren Koppeleinrichtung 161 neben einer Federkennlinienanpassungseinheit in engeren Grenzen auch eine Nulllagenkorrektureinheit verwirklicht werden.

Die Effizienz der Rückstellung ist hierbei aber nicht so hoch wie hinsichtlich im Zusammenhang mit den Koppelstellen-Lageverstelleinheiten 50, 97, 107, 122 und 142, welche vorstehend beschrieben sind.

Hinsichtlich der Darstellungen der Figuren 12A bis 12C ist die weitere Koppeleinrichtung 161 noch im Zusammenhang mit einer Fluidversorgungseinrichtung 170 gezeigt, wobei diese Fluidmittelversorgungseinrichtung 170 im Bereich des Sitzunterbaus 9 des Fahrzeugsitzes 1 (siehe Figur 1) angeordnet ist.

Diese Fluidmittelversorgungseinrichtung 170 umfasst ein Fluidmittelreservoir 171, welches über eine Fluidmittelleitungsverbindung 172 mit dem Pneumatikfederungselement 154 fluidtechnisch wirkverbunden ist. Zwischen dem Fluidmittelreservoir 171 und dem Pneumatikfederungselement 154 ist noch ein Zu- und Abluftventil 173 vorgesehen, welches noch ein Drosselelement 174 umfasst.

Eine betriebssichere Fluidmittelversorgung wird hinsichtlich des Fluidmittelreservoirs 171 durch einen an dieses Fluidmittelreservoir 171 angeschlossenen Kompressor 175 gewährleistet, so dass stets ein ausreichendes Fluidmittelvolumen zum Modulieren des Pneumatikfederungselements 151 zur Verfügung steht.

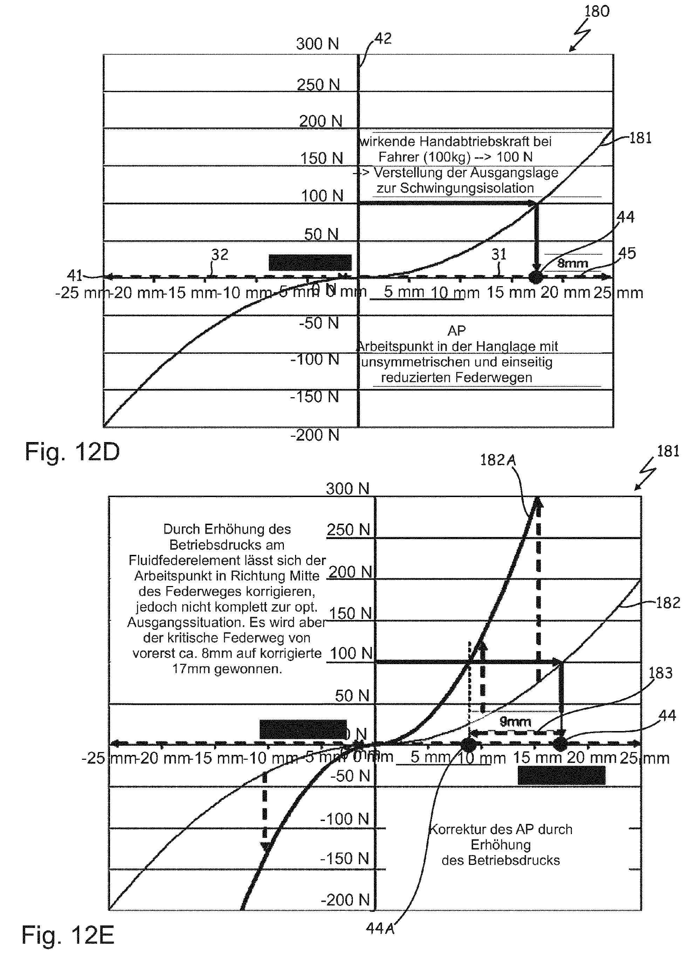

Das in der Figur 12D gezeigte Kraft-Weg-Diagramm 180 illustriert der sechsten alternativen Ausgestaltung die Federrate über den Federweg, wobei es an seiner Abszisse 41 sowohl den vorderen Federungsweg 31 als auch den hinteren Federungsweg 32 und an seiner Ordinate 42 die Federkräfte des Pneumatikfederungselements 151 bzw. die auf das sitzteilseitige Oberteil 16 wirkenden Hangabtriebskräfte aufzeigt. Beispielsweise betragen die Hangabtriebskräfte bei einem Personengewicht von 100 kg entsprechend 100 Newton. Im Zusammenhang mit einer progressiven Federkennlinie 181 ergibt sich nun eine Verschiebung des Arbeitspunktes 44 von 17 mm, so dass hinsichtlich des vorderen Federungswegs 31 lediglich ein Restfederweg 45 von 8 mm verbleibt.

Hinsichtlich des in der Figur 12E gezeigten Kraft-Weg-Diagramms 181 wird die Federrate über den Federweg mit aktiver Korrektur der Ausgangslage bezüglich der weiteren Koppeleinrichtung 161 visualisiert.

Durch eine Erhöhung des Betriebsdrucks innerhalb des Pneumatikfederungselements 151 steigt die progressive Federkennlinie 182 zu der veränderten progressiven Federkennlinie 182A an, wodurch sich der Arbeitspunkt 44 um eine Korrekturverschiebung 183 in den korrigierten Arbeitspunkt 44A verschieben lässt. Hierdurch wird der Restfederweg 45 von 8 mm auf 17 mm erhöht.

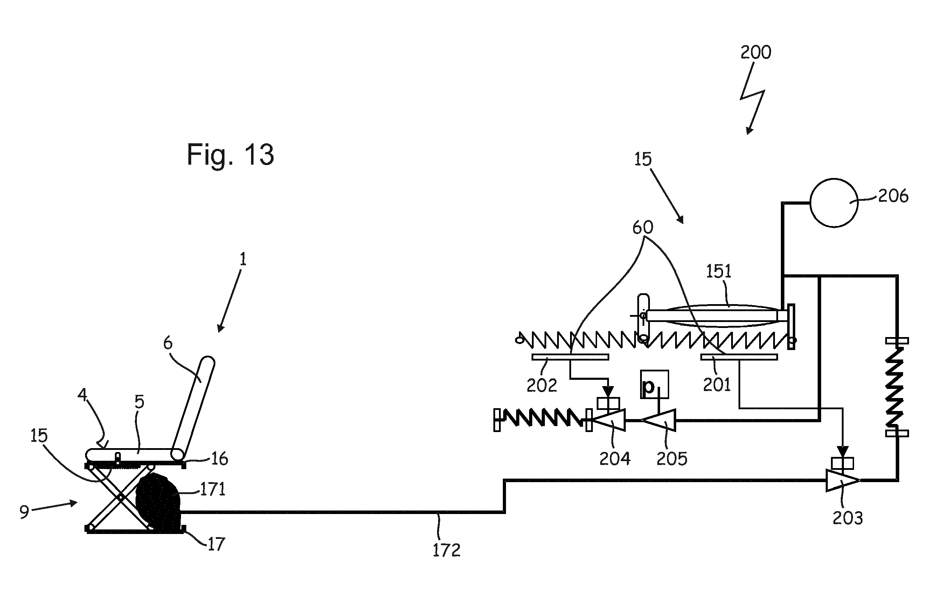

Hinsichtlich der Figur 13 ist eine Optimierungsvorrichtung 200 für ein Pneumatikfederungselement 151 beschrieben, welches in einer entsprechenden Lager- und Deformationseinrichtung 22 gelagert ist.

Die Optimierungsvorrichtung 200 kann durch das Fluidmittelreservoir 171 über die Fluidmittelleitungsverbindung 172 mit einem Fluidmittel gespeist werden, wobei eine alternative Nulllagenkorrektureinheit 60 ein erstes und ein zweites Proportionalschieberventilelement 201 und 202 umfassen kann, um pneumatisch unabhängiger von dem Pneumatikfederungselement 151 eine Horizontal-Nulllagenkorrektur bzw. Niveauregulierung vornehmen zu können.

Das erste Proportionalschieberventilelement 201 ist mittels eines ersten Druckventils 203 mit der Fluidmittelleitungsverbindung 172 und das zweite Proportionalschieberventilelement 202 mittels eines zweiten Druckventils 204 mit der Fluidmittelleitungsverbindung 172 verbunden, wobei dem zweiten Druckventil 204 noch ein Restdruck-Druckventil 205 zugeordnet ist, so dass der Restdruck im Balg bestehen bleiben und eine Rollbildung gewährleistet werden kann.

Darüber hinaus weist die Optimierungseinrichtung 200 neben dem Fluidmittelreservoir 171 noch ein weiteres Fluidmittelzusatzvolumen 206 auf, mittels welchem insbesondere eine weiche Kennlinie bzw. die Progressivität hinsichtlich der Niveauregulierung erzielt werden kann.

Eine Ausgangslagenkorrektur kann nach einer Analyse des Verstellungsgrades bezüglich eines sitzteilseitigen Oberteils 16 und einer Schwingungsisolierung bei einer Berg- oder Talfahrt derart ermittelt werden, wobei als erster Schritt ein Positionsausgleich hinsichtlich Bergfahrten erhebliche Verbesserung bringt, weil hinsichtlich einer Bergauffahrt der Fahrer von dem Rückenlehnenteil 6 gestützt wird. Insofern rutscht der Fahrer hierbei nicht von der Sitzfläche 4 und dadurch entfällt eine Abstützung durch die Beine des Fahrers und somit auch eine Korrektur der Horizontalfederungsausgangslage, welche bergab durch den Fahrer übernommen wird, da er ansonsten von der Sitzfläche 4 rutschen würde.

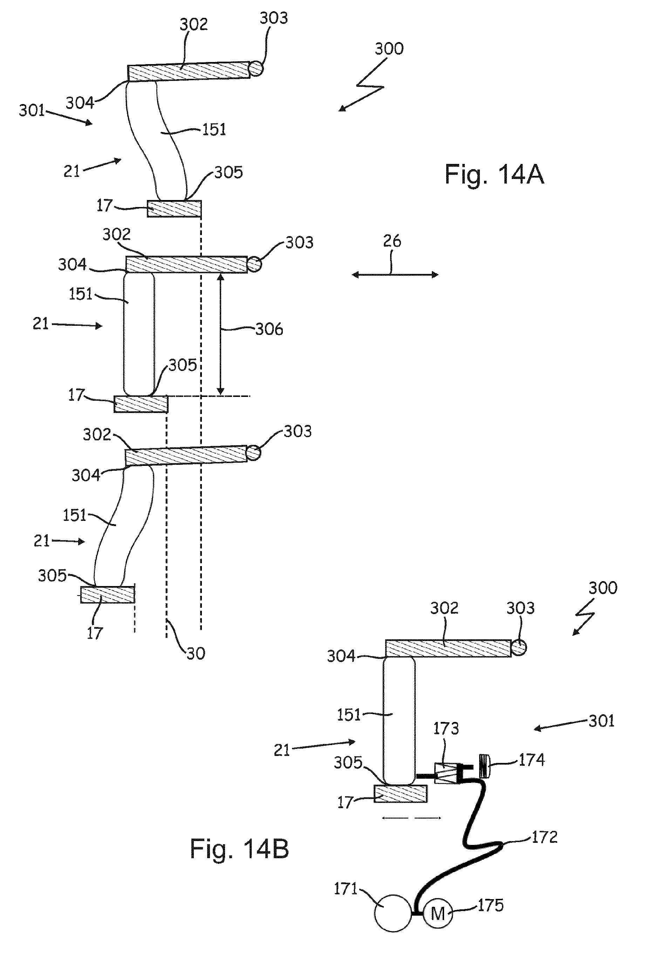

Bei der in den Figuren 14A und 14B gezeigten siebten alternativen Ausgestaltung 300 einer anderen Koppeleinrichtung 301 ist ein deformierbares Federungselement 21 (siehe beispielsweise Figur 11) wieder als Pneumatikfederungselement 151 ausgestaltet.

Das Pneumatikfederungselement 151 ist einerseits mittels eines Hebelarmelements 302 über ein Drehlager 303 an dem sitzteilseitigen Oberteil 16 der Horizontalschwingungseinrichtung 15 (siehe beispielsweise Figur 2A) angelenkt. Andererseits ist es an dem karosserieseitigen Unterteil 16 fest angeschraubt, oder umgekehrt.

Das Hebelarmelement 302 ist mit einer festen Verschraubung (hier nicht explizit gezeigt) an dem Pneumatikfederungselement 151 festgelegt, so dass insgesamt eine Auslenkung des sitzteilseitigen Oberteils 16 gegenüber dem karosserieseitigen Unterteil 17, oder umgekehrt, ausschließlich durch eine Scherung bzw. Deformation des Pneumatikfederungselements 151 möglich ist, wie durch die drei übereinander angeordneten Darstellungen gemäß der Figur 14A gut erkennbar ist.

Das Drehlager ermöglicht hierbei einen Ausgleich bezüglich der Längenänderung bei der Deformation des Pneumatikfederungselements 151.

Insofern kann eine Federung bzw. eine Nulllagenkorrektur in Horizontalfederungsrichtung 26 erzielt werden.

Das Pneumatikfederungselement 151 kann über eine Fluidmittelleitungsverbindung 172 durch ein Fluidmittelreservoir 171 und/oder einen Kompressor 175 gespeist werden, wobei in der Fluidmittelleitungsverbindung 172 noch ein Zu- und Abluftventil 173 mit einem Drosselelement 174 integriert ist.

Ergänzend kann hinsichtlich der siebten alternativen Ausgestaltung 300 noch gesagt werden:
Das Pneumatikfederungselement 151 hat das Bestreben sich mit steigendem Druck längs auszurichten. Wird es, wie in den gezeigten Darstellungen, an den Endpunkten 304 und 305 fixiert, treten ausschließlich Scherkräfte bei der Verformung des Pneumatikfederungselements 151 auf. Diese entgegengesetzt zur Auslenkung rückführenden Scherkräfte können durch Druckbeaufschlagung geregelt werden.

Eine Scherung des Pneumatikfederungselements 151 ist bei drucklosen bzw. mit geringen Druck beaufschlagten Pneumatikfederungselement 151 leichter, da eine geringe Federkonstante vorliegt. Im waagrechten ruhigen Betrieb ist eine weiche Federkennlinie für leichte als auch für schwerere Fahrer zur Schwingungsisolation sinnvoll.

Mit steigender Auslenkung bzw. auch mit steigendem Fahrergewicht wird der Druck und somit die Gegenkraft des Pneumatikfederungselements 151 erhöht, um ein Anschlagen gegen Endanschläge 38 bzw. 39 (siehe beispielsweise Figur 2D) entgegenzuwirken. Durch diese Scherung wird das Pneumatikfederungselement 151 in der gezeigten Höhe 306 etwas verkürzt, was mindestens das eine Drehlager 303 erforderlich macht. Zusätzlich wird durch das Drehlager 303 das übrige Führungssystem nicht quer beansprucht.

Beim Rückweg wird der Druck aus dem Pneumatikfederungselement 151 abgelassen, so dass die rückführende Kraft reduziert und somit ein Aufschaukeln durch einen Rebound verhindert wird.

Es ist klar, dass hierzu mindestens ein Wegmesssystem (nicht gezeigt) oder unter Umständen auch ein Beschleunigungsmesssystem (hier nicht gezeigt) zur Erfassung der aktuell auftretenden Anregung simultan zur aktuellen Position im Federweg erforderlich ist.

Einem langfristigen Abweichen der mittigen Ruhelage bzw. einem Auslenken aus der Horizontal-Nulllagenposition 30 heraus, etwa bei einem Betrieb bei Berg- oder Talfahrten, kann durch kontinuierlichen Druckaufbau (steigende Federkennlinie) entgegengewirkt werden, wodurch wiederum ein ausreichender Federweg gewährleistet werden kann.

Durch die Form und Beschaffenheit des Pneumatikfederungselements 151 kann eine zusätzliche Progression bei Scherung bzw. Druckanstieg in die Federkennlinie eingeprägt werden. Eine weitere Progression der Federkennlinie lässt sich idealweise durch eine weitere Bewegungseinschränkung im Drehlager erzielen, wenn die entstehende Dehnung durch Verkürzung des Pneumatikfederungselements 151 bei einem Druckanstieg als weiterer Kraftanstieg in der Auslenkung wirkt.

Auch hier könnten kumulativ noch Anlageflächen für das Pneumatikfederungselement 151 vorgesehen werden, um einen zusätzlichen Kräfteanstieg in der Auslenkung zu realisieren. Es versteht sich, dass es sich bei den vorstehend erläuterten Ausführungsbeispielen lediglich um erste Ausgestaltungen des erfindungsgemäßen Fahrzeugsitzes handelt. Insofern beschränkt sich die Ausgestaltung der Erfindung nicht auf diese Ausführungsbeispiele.

### Bezugszeichenliste

- 1: Fahrzeugsitz
- 2: Fahrzeug
- 3: Vorwärtsfahrtrichtung
- 4: Sitzfläche
- 5: Sitzteil
- 6: Rückenlehnenteil
- 7: Lenkrad
- 8: Armauflage
- 9: Sitzunterbau
- 10: Karosserie
- 11: Betätigungshebel
- 12: Räder
- 13: Untergrund
- 14: fiktive Horizontalebene
- 15: Horizontalfederungseinrichtung
- 16: sitzteilseitiges Oberteil
- 17: karosserieseitiges Unterteil
- 20: Koppeleinrichtung
- 21: deformierbares Federungselement
- 21A: erster Anbringbereich
- 21B: zweiter Anbringbereich
- 22: Lager- und Deformationseinrichtung
- 22A: Lagerbereich
- 23: Schraubenfederungselement
- 24: erstes Koppelelement
- 25: weiteres Koppelelement
- 26: Horizontalfederungsrichtung
- 29: Dämpfereinrichtung
- 30: Horizontal-Nulllagenposition
- 31: vorderer Federungsweg
- 32: hinterer Federungsweg
- 35: geneigte Ausrichtung
- 36: Neigungswinkel
- 37: Hangabtriebskräfte
- 38: vorderer Endanschlag
- 39: hinterer Endanschlag
- 40: Kraft-Weg-Diagramm
- 41: Abszisse
- 42: Ordinate
- 43: lineare Federkennlinie
- 43A: verschobene lineare Federkennlinie
- 44: Arbeitspunkt
- 44A: korrigierter Arbeitspunkt
- 45: Restfederungsweg
- 46: Korrekturverschiebung
- 50: Koppelstellen-Lageverstelleinheit
- 51: Koppelstelle
- 52: Linearverstelleinrichtung
- 53: Gehäuseelement
- 54: Spindelelement
- 55: E-Motor
- 60: Nulllagenkorrektureinheit
- 61: Unterteilkoppelstelle
- 65: Federkennlinienanpassungseinheit
- 66: Kraft-Weg-Diagramm
- 70: weitere mögliche Lageverstellmechanik
- 71: Pendeleinrichtung
- 72: Pendelachse
- 73: Pendelarmelement
- 74: erstes Ende
- 75: Pendelgewichtselement
- 76: anderes Ende
- 77: Pendeldrehbewegung
- 78: ausgelenkte Pendellage
- 79: Vertikalpendellage
- 90: erste alternative Ausgestaltung
- 91: weitere Koppeleinrichtung
- 92: Aufnahmeraum
- 94: erste Anlagefläche
- 95: zweite Anlagefläche
- 96: seitliche Randbereiche
- 97: weitere Koppelstellen-Lageverstelleinheit
- 98: Kulissenführung
- 99: Kulissensteinelement
- 100: Kulissennut
- 101: Koppelstelle
- 102: Unterteilkoppelstelle
- 105: zweite alternative Ausgestaltung
- 106: weitere Koppeleinrichtung
- 107: weitere Koppelstellen-Lageverstelleinheit
- 108: Gabelelement
- 109: erstes Ende
- 110: zweites Ende
- 111: erste Koppelstelle
- 112: zweite Koppelstelle
- 115: Kraft-Weg-Diagramm
- 116: Kraft-Weg-Diagramm
- 117: progressive Federkennlinie
- 117A: verschobene progressive Federkennlinie
- 118: Korrekturverschiebung
- 120: dritte alternative Ausgestaltung
- 121: weitere Koppeleinrichtung
- 122: andere Koppelstellen-Lageverstelleinheit
- 123: Drehlager
- 123A: erste Koppelstelle
- 124: Linearlager
- 124A: zweite Koppelstelle
- 125: gekrümmte Bahnkurve
- 126: Querverlagerungskomponente
- 127: progressive Federkennlinie
- 127A: veränderte progressive Federkennlinie
- 127B: verlagerte und veränderte progressive Federkennlinie
- 130: Kraft-Weg-Diagramm
- 131: Korrekturverschiebung
- 140: vierte alternative Ausgestaltung
- 141: weitere Koppeleinrichtung
- 142: Koppelstellen-Lageverstelleinheit
- 143: Koppelstelle
- 150: fünfte alternative Ausgestaltung
- 151: Pneumatikfederungselement
- 160: sechste alternative Ausgestaltung
- 161: weitere Koppeleinrichtung
- 170: Fluidmittelversorgungseinrichtung
- 171: Fluidmittelreservoir
- 172: Fluidmittelleitungsverbindung
- 173: Zu- und Abluftventil
- 174: Drosselelement
- 175: Kompressor
- 180: Kraft-Weg-Diagramm
- 181: Kraft-Weg-Diagramm
- 182: progressive Federkennlinie
- 182A: veränderte progressive Federkennlinie
- 183: Korrekturverschiebung
- 200: Optimierungsvorrichtung
- 201: erstes Proportionalschieberventilelement
- 202: zweites Proportionalschieberventilelement
- 203: erstes Druckventil
- 204: zweites Druckventil
- 205: Restdruck-Druckventil
- 206: Fluidmittelzusatzvolumen
- 300: siebte alternative Ausgestaltung
- 301: andere Koppeleinrichtung
- 302: Hebelarmelement
- 303: Drehlager
- 304: oberer Endpunkt
- 305: unterer Endpunkt
- 306: Höhe

- a: Beschleunigung
- s: Linearverstellung
- X: Fahrzeuglängsrichtung
- Y: Fahrzeugbreitenrichtung
- Z: Fahrzeughöhenrichtung

## Patentansprüche

1. Fahrzeugsitz (1) mit einem sich in Fahrzeuglängsrichtung (X) und in Fahrzeugbreitenrichtung (Y) erstreckenden Sitzteil (5) zum Aufnehmen einer Person, mit einem Rücklehnenteil (6) zum rückseitigen Abstützen der Person und mit einem Sitzunterbau (9) zum Federn und/oder Dämpfen zumindest des Sitzteils (5) gegenüber einer Karosserie (10) eines Fahrzeugs (2), bei welchem der Sitzunterbau (9) zumindest eine Horizontalfederungseinrichtung (15) zum Federn des Sitzteils (5) gegenüber der Karosserie (10) in Fahrzeuglängsrichtung (X) und/oder in Fahrzeugbreitenrichtung (Y) umfasst, wobei die zumindest eine Horizontalfederungseinrichtung (15) ein karosserieseitiges Unterteil (17) und ein hierzu relativ verlagerbares sitzteilseitiges Oberteil (16) umfasst, bei welchem zwischen dem sitzteilseitigen Oberteil (16) und dem karosserieseitigen Unterteil (17) eine Koppeleinrichtung (20; 91; 106; 121; 141) wechselwirkend angeordnet ist, wobei die Koppeleinrichtung (20; 91; 106; 121; 141) als ein erstes Koppelelement (24) ein deformierbares Federungselement (21) und als ein weiteres Koppelelement (25) eine Lager- und Deformationseinrichtung (22) hierfür umfasst, wobei das deformierbare Federungselement (21) zwischen zwei aufeinander zugerichteten Anlageflächen (94, 95) eines Aufnahmeraums (92) der Lager- und Deformationseinrichtung (22) angeordnet ist, und wobei die Koppelelemente (24, 25) jeweils mit dem sitzteilseitigen Oberteil (16) oder mit dem karosserieseitigen Unterteil (17) gekoppelt sind,
**dadurch gekennzeichnet, dass**
das erste Koppelelement (24) durch eine Koppelstellen-Lageverstelleinheit (50; 97; 107; 122; 142) relativ verlagerbar gegenüber und an dem sitzteilseitigen Oberteil (16) oder das weitere Koppelelement (25) durch eine Koppelstellen-Lageverstelleinheit (50; 97; 107; 122; 142) relativ verlagerbar gegenüber und an dem karosserieseitigen Unterteil (17) angeordnet ist oder umgekehrt, wobei die Koppeleinrichtung (20; 91; 106; 121; 141) eine Nulllagenkorrektureinheit (60) zum Anpassen der Horizontal-Nulllagenposition (30) der Horizontalfederungseinrichtung (15) umfasst, und wobei die Nullagenkorrektur durch eine Linearverstellung sowohl an der Koppelstelle zum sitzteilseitigen Oberteil (16) als auch an der Koppelstelle zum karosserieseitigen Unterteil (17) erfolgbar ist.

2. Fahrzeugsitz (1) nach Anspruch 1,
**dadurch gekennzeichnet, dass**
das erste Koppelelement (24) durch eine Koppelstellen-Lageverstelleinheit (50; 97; 107; 122; 142) relativ verlagerbar gegenüber und an dem sitzteilseitigen Oberteil (16) und das weitere Koppelelement (25) durch eine Koppelstellen-Lageverstelleinheit (50; 97; 107; 122; 142) relativ verlagerbar gegenüber und an dem karosserieseitigen Unterteil (17) angeordnet ist, oder umgekehrt.

3. Fahrzeugsitz (1) nach einem der Ansprüche 1 bis 2,
**dadurch gekennzeichnet, dass**
das erste Koppelelement (24) und das sitzteilseitige Oberteil (16) in einer gemeinsamen Oberteilkoppelstelle durch eine Koppelstellen-Lageverstelleinheit (50; 97; 107; 122; 142) miteinander gekoppelt sind, dass die Lage der Oberteilkoppelstelle relativ zu dem sitzteilseitigen Oberteil (16) variabel einstellbar ist.

4. Fahrzeugsitz (1) nach einem der Ansprüche 1 bis 3,
**dadurch gekennzeichnet, dass**
die Koppeleinrichtung (20; 91; 106; 121; 141) eine Nulllagenkorrektureinheit (60) zum Anpassen der Horizontal-Nulllagenposition (30) der Horizontalfederungseinrichtung (15) umfasst, wobei das weitere Koppelelement (25) und das karosserieseitige Unterteil (17) in einer gemeinsamen Unterteilkoppelstelle (61; 102) derart miteinander gekoppelt sind, dass die Lage der Unterteilkoppelstelle (61; 102) relativ zu dem karosserieseitigen Unterteil (17) variabel einstellbar ist.

5. Fahrzeugsitz (1) nach einem der Ansprüche 1 bis 4,
**dadurch gekennzeichnet, dass**
die Koppeleinrichtung (20; 91; 106; 121; 141) eine Federkennlinienanpassungseinheit (65) zum Anpassen der Federkennlinie des deformierbaren Federungselements (21) umfasst, wobei das erste Koppelelement (24) und das sitzteilseitige Oberteil (16) in einer gemeinsamen Oberteilkopplungsstelle durch eine Koppelstellen-Lageverstelleinheit (50; 97; 107; 122; 142) miteinander gekoppelt sind, dass die Lage der Oberteilkopplungsstelle relativ zu dem sitzteilseitigen Oberteil (16) variabel einstellbar ist.

6. Fahrzeugsitz (1) nach einem der Ansprüche 1 bis 5,
**dadurch gekennzeichnet, dass**
die Koppeleinrichtung (20; 91; 106; 121; 141) eine Federkennlinienanpassungseinheit (65) zum Anpassen der Federkennlinie des deformierbaren Federungselements (21) umfasst, wobei das weitere Koppelelement (25) und das karosserieseitige Unterteil (17) in einer gemeinsamen Unterteilkoppelstelle (61; 102) durch eine KoppelstellenLageverstelleinheit (50; 97; 107; 122; 142) miteinander gekoppelt sind, dass die Lage der Unterteilkoppelstelle (61; 102) relativ zu dem karosserieseitigen Unterteil (17) variabel einstellbar ist.

7. Fahrzeugsitz (1) nach einem der Ansprüche 1 bis 6,
**dadurch gekennzeichnet, dass**
die Koppeleinrichtung (20; 91; 106; 121; 141) eine mechanisch oder pneumatisch arbeitende Einstelleinrichtung zum Verlagern von Koppelstellen (51; 101; 111, 112; 123A, 124A; 143) gegenüber dem sitzteilseitigen Oberteil (16) und/oder dem karosserieseitigen Unterteil (17) umfasst.

8. Fahrzeugsitz (1) nach einem der Ansprüche 1 bis 7,
**dadurch gekennzeichnet, dass**
eines der Koppelelemente (24, 25) zum Ausgestalten einer jeweiligen Koppelstelle (123A, 124A) ein Drehlager (123) und/oder ein Linearlager (124) umfasst.

9. Fahrzeugsitz (1) nach Anspruch 8,
**dadurch gekennzeichnet, dass**
das Linearlager (124) eine gekrümmte Bahnkurve (125) umfasst, entlang welcher ein durch das Linearlager (124) ausgestalteter Koppelpunkt (124A) bewegbar angeordnet ist.

10. Fahrzeugsitz (1) nach einem der Ansprüche 1 bis 7,
**dadurch gekennzeichnet, dass**
eines der Koppelelemente (24, 25) sowohl mittels eines Anbringbereich (21A) ortsfest als auch mittels einer gegenüber dem sitzteilseitigen Oberteil (16) oder dem karosserieseitigen Unterteil (17) verlagerbaren Koppelstelle (143) verlagerbar an dem sitzteilseitigen Oberteil (16) oder an dem karosserieseitigen Unterteil (17) abgeordnet ist.

11. Fahrzeugsitz (1) nach einem der Ansprüche 3 bis 10,
**dadurch gekennzeichnet, dass**
die Nulllagenkorrektureinheit (60) und/oder die Federkennlinienanpassungseinheit (65) durch eine Koppelstellen-Lageverstelleinheit (50; 97; 107; 122; 142) zwischen einem der Koppelelemente (24, 25) und dem sitzteilseitigen Oberteil (16) oder dem karosserieseitigen Unterteil (17) angeordnet sind, dass das jeweilige Koppelelement (24, 25) mittels der Nulllagenkorrektureinheit (60) oder der Federkennlinienanpassungseinheit (65) mit dem sitzteilseitigen Oberteil (16) oder mit dem karosserieseitigen (17) Unterteil wirkverbunden ist.

12. Fahrzeugsitz (1) nach einem der Ansprüche 3 bis 11,
**dadurch gekennzeichnet, dass**
die Nulllagenkorrektureinheit (60) und/oder die Federkennlinienanpassungseinheit (65) eine Frequenzselektionseinrichtung umfassen, um höherfrequente Fremdanregungen von Neigungsanregungen unterscheiden zu können.

13. Kraftfahrzeug oder Nutzkraftfahrzeug (2) mit einer Fahrgastzelle und einem darin angeordneten Fahrzeugsitz (1) zum Aufnehmen eines Fahrgastes,
**dadurch gekennzeichnet, dass**
das Kraftfahrzeug oder das Nutzkraftfahrzeug (2) einen Fahrzeugsitz (1) nach einem der vorhergehenden Ansprüche aufweist.

## Claims

1. Vehicle seat (1) comprising a seat part (5) extending in the vehicle longitudinal direction (X) and in the vehicle transverse direction (Y) for receiving a person, comprising a backrest part (6) for supporting the back of the person, and comprising a seat substructure (9) for suspending and/or damping at least the seat part (5) with respect to a body (10) of a vehicle (2), in which the seat substructure (9) comprises at least one horizontal suspension device (15) for suspending the seat part (5) with respect to the body (10) in the vehicle longitudinal direction (X) and/or in the vehicle transverse direction (Y), the at least one horizontal suspension device (15) comprising a body-side lower part (17) and a seat-part-side upper part (16) that is displaceable relative thereto, in which a coupling device (20; 91; 106; 121; 141) is arranged in an interactive manner between the seat-part-side upper part (16) and the body-side lower part (17), the coupling device (20; 91; 106; 121; 141) comprising, for this purpose, a deformable suspension element (21) as a first coupling element (24) and a bearing and deformation device (22) as a further coupling element (25), the deformable suspension element (21) being arranged between two mutually facing contact faces (94, 95) of a receiving space (92) of the bearing and deformation device (22), and the coupling elements (24, 25) each being coupled to the seat-part-side upper part (16) or to the body-side lower part (17), **characterised in that** the first coupling element (24) is arranged on the seat-part-side upper part (16) so as to be displaceable relative thereto by means of a coupling point position adjustment unit (50; 97; 107; 122; 142), or the further coupling element (25) is arranged on the body-side lower part (17) so as to be displaceable relative thereto by means of a coupling point position adjustment unit (50; 97; 107; 122; 142), or vice versa, the coupling device (20; 91; 106; 121; 141) comprising a zero position correction unit (60) for adapting the horizontal zero position (30) of the horizontal suspension device (15), and the zero position correction being achievable by a linear adjustment both at the coupling point for the seat-part-side upper part (16) and at the coupling point for the body-side lower part (17)

2. Vehicle seat (1) according to claim 1, **characterised in that** the first coupling element (24) is arranged on the seat-part-side upper part (16) so as to be displaceable relative thereto by means of a coupling point position adjustment unit (50; 97; 107; 122; 142) and the further coupling element (25) is arranged on the body-side lower part (17) so as to be displaceable relative thereto by means of a coupling point position adjustment unit (50; 97; 107; 122; 142), or vice versa.

3. Vehicle seat (1) according to either claim 1 or claim 2, **characterised in that** the first coupling element (24) and the seat-part-side upper part (16) are coupled together at a common upper part coupling point by means of a coupling point position adjustment unit (50; 97; 107; 122; 142) in such a way that the position of the upper part coupling point can be set variably with respect to the seat-part-side upper part (16).

4. Vehicle seat (1) according to any of claims 1 to 3, **characterised in that** the coupling device (20; 91; 106; 121; 141) comprises a zero position correction unit (60) for adapting the horizontal zero position (30) of the horizontal suspension device (15), the further coupling element (25) and the body-side lower part (17) being coupled to one another at a common lower part coupling point (61; 102) in such a way that the position of the lower-part coupling point (61; 102) can be set variably with respect to the body-side lower part (17).

5. Vehicle seat (1) according to any of claims 1 to 4, **characterised in that** the coupling device (20; 91; 106; 121; 141) comprises a spring characteristic adaptation unit (65) for adapting the spring characteristic of the deformable suspension element (21), the first coupling element (24) and the seat-part-side upper part (16) being coupled to one another at a common upper part coupling point by means of a coupling point position adjustment unit (50; 97; 107; 122; 142) in such a way that the position of the upper part coupling point can be set variably with respect to the seat-part-side upper part (16).

6. Vehicle seat (1) according to any of claims 1 to 5, **characterised in that** the coupling device (20; 91; 106; 121; 141) comprises a spring characteristic adaptation unit (65) for adapting the spring characteristic of the deformable suspension element (21), the further coupling element (25) and the body-side lower part (17) being coupled to one another at a common lower part coupling point (61; 102) by means of a coupling point position adjustment unit (50; 97; 107; 122; 142) in such a way that the position of the lower part coupling point (61; 102) can be set variably with respect to the body-side lower part (17).

7. Vehicle seat (1) according to any of claims 1 to 6, **characterised in that** the coupling device (20; 91; 106; 121; 141) comprises a mechanically or pneumatically operating adjustment device for displacing the coupling points (51; 101; 111, 112; 123A, 124A; 143) with respect to the seat-part-side upper part (16) and/or the body-side lower part (17).

8. Vehicle seat (1) according to any of claims 1 to 7, **characterised in that** one of the coupling elements (24, 25) comprises a rotary bearing (123) and/or a linear bearing (124) for configuring a respective coupling point (123A, 124A).

9. Vehicle seat (1) according to claim 8, **characterised in that** the linear bearing (124) has a curved path (125), a coupling point (124A) configured by means of the linear bearing (124) being arranged so as to be movable along said path.

10. Vehicle seat (1) according to any of claims 1 to 7, **characterised in that** one of the coupling elements (24, 25) is arranged on the seat-part-side upper part (16) or on the body-side lower part (17) both in a stationary manner by means of an attachment region (21 A) and displaceably by means of a coupling point (143) which is displaceable with respect to the seat-part-side upper part (16) or the body-side lower part (17).

11. Vehicle seat (1) according to any of claims 3 to 10, **characterised in that** the zero position correction unit (60) and/or the spring characteristic adaptation unit (65) are arranged, by means of a coupling point position adjustment unit (50; 97; 107; 122; 142), between one of the coupling elements (24, 25) and the seat-part-side upper part (16) or the body-side lower part (17) in such a way that the respective coupling element (24, 25) is operatively connected to the seat-part-side upper part (16) or the body-side lower part (17) by means of the zero position correction unit (60) or the spring characteristic adaptation unit (65).

12. Vehicle seat (1) according to any of claims 3 to 11, **characterised in that** the zero position correction unit (60) and/or the spring characteristic adaptation unit (65) comprise(s) a frequency selection device so as to be able to distinguish higher-frequency external excitations from inclination excitations.

13. Motor vehicle or utility vehicle (2) comprising a passenger compartment and a vehicle seat (1) arranged therein for receiving a passenger, **characterised in that** the motor vehicle or utility motor vehicle (2) comprises a vehicle seat (1) according to any of the preceding claims.

## Revendications

1. Siège de véhicule (1) avec une partie d'assise (5) s'étendant dans la direction longitudinale du véhicule (X) et dans la direction de la largeur du véhicule (Y) pour le logement d'une personne, avec une partie de dossier (6) pour l'appui arrière de la personne et avec une infrastructure de siège (9) pour la suspension et/ou l'amortissement d'au moins la partie d'assise (5) par rapport à une carrosserie (10) d'un véhicule (2), dans lequel la structure de siège (9) comprend au moins un dispositif de suspension horizontale (15) pour la suspension de la partie d'assise (5) par rapport à la carrosserie (10) dans la direction longitudinale du véhicule (X) et/ou dans la direction de la largeur du véhicule (Y), l'au moins un dispositif de suspension horizontale (15) comprenant une partie inférieure côté carrosserie (17) et une partie supérieure côté partie d'assise (16) mobile par rapport à celle-ci, dans laquelle, entre la partie supérieure côté partie d'assise (16) et la partie inférieure côté carrosserie (17), est disposé un dispositif de couplage (20 ; 91 ; 106 ; 121 ; 141) de manière interactive, le dispositif de couplage (20 ; 91 ; 106 ; 121 ; 141) comprenant, en tant que premier élément de couplage (24), un élément de suspension déformable (21) et, en tant qu'élément de couplage supplémentaire (25), un dispositif de logement et de déformation (22), l'élément de suspension déformable (21) étant disposé entre deux surfaces d'appui (94, 95), orientées l'une vers l'autre, d'un espace de logement (92) du dispositif de logement et de déformation (22), et les éléments de couplage (24, 25) étant couplés chacun avec la partie supérieure côté partie d'assise (16) ou avec la partie inférieure côté carrosserie (17),
**caractérisé en ce que**
le premier élément de couplage (24) est disposé, par une unité de réglage de position de point de couplage (50 ; 97 ; 107 ; 122 ; 142), de manière mobile par rapport et au niveau de la partie supérieure côté partie d'assise (16) ou l'élément de couplage supplémentaire (25) est disposé, par une unité de réglage de position de point de couplage (50 ; 97 ; 107 ; 122 ; 142), de manière mobile par rapport et au niveau de la partie inférieure côté carrosserie (17) ou inversement, le dispositif de couplage (20 ; 91 ; 106; 121 ; 141) comprenant une unité de correction de position zéro (60) permettant d'adapter la position zéro horizontale (30) du dispositif de suspension horizontale (15) et la correction de position zéro pouvant être effectuée par un réglage linéaire aussi bien au niveau du point de couplage à la partie supérieur côté partie d'assise (16) qu'au niveau du point de couplage à la partie inférieure côté carrosserie (17).

2. Siège de véhicule (1) selon la revendication 1
**caractérisé en ce que**
le premier élément de couplage (24) est disposé, par une unité de réglage de position de point de couplage (50 ; 97 ; 107 ; 122 ; 142), de manière mobile par rapport et au niveau de la partie supérieure côté partie d'assise (16) et l'élément de couplage supplémentaire (25) est disposé, par une unité de réglage de position de point de couplage (50 ; 97 ; 107 ; 122 ; 142), de manière mobile par rapport et au niveau de la partie inférieure côté carrosserie (17) ou inversement.

3. Siège de véhicule (1) selon l'une des revendications 1 à 2,
**caractérisé en ce que**
le premier élément de couplage (24) et la partie supérieure côté partie d'assise (16) sont couplées entre elles, au niveau d'un point de couplage de partie supérieure, par une unité de réglage de position de point de couplage (50 ; 97 ; 107 ; 122 ; 142), de façon à ce que la position du point de couplage de la partie supérieure soit réglable de manière variable par rapport à la partie supérieure côté partie d'assise (16).

4. Siège de véhicule (1) selon l'une des revendications 1 à 3,
**caractérisé en ce que**
le dispositif de couplage (20 ; 91 ; 106 ; 121 ; 141) comprend une unité de correction de position zéro (60) pour adapter la position zéro horizontale (30) du dispositif de suspension horizontale (15), l'élément de couplage supplémentaire (25) et la partie inférieure côté carrosserie (17) étant couplées entre eux au niveau d'un point de couplage de partie inférieure (61 ; 102) de façon à ce que la position du point de couplage de la partie inférieure (61 ; 102) soit réglable de manière variable par rapport à la partie inférieure côté carrosserie (17).

5. Siège de véhicule (1) selon l'une des revendications 1 à 4,
**caractérisé en ce que**
le dispositif de couplage (20 ; 91 ; 106 ; 121 ; 141) comprend une unité d'adaptation de courbe caractéristique de ressort (65) pour adapter la courbe caractéristique de ressort de l'élément de suspension déformable (21), le premier élément de couplage (24) et la partie supérieure côté partie d'assise (16) étant couplées entre eux au niveau d'un point de couplage de la partie supérieure par une unité de réglage de position du point de couplage (50 ; 97 ; 107 ; 122 ; 142), de façon à ce que la position du point de couplage de la partie supérieure soit réglable de manière variable par rapport à la partie supérieure côté partie d'assise (16).

6. Siège de véhicule (1) selon l'une des revendications 1 à 5,
**caractérisé en ce que**
le dispositif de couplage (20 ; 91 ; 106 ; 121 ; 141) comprend une unité d'adaptation de courbe caractéristique de ressort (65) pour adapter la courbe caractéristique de ressort de l'élément de suspension déformable (21), le premier élément de couplage (25) et la partie supérieure côté partie d'assise (16) étant couplés entre eux, l'élément de couplage supplémentaire (25) et la partie inférieure côté carrosserie (17) étant couplés entre eux, au niveau d'un point de couplage de la partie inférieure (61 ; 102) par une unité de réglage de position de point de couplage (50 ; 97 ; 107 ; 122 ; 142), de façon à ce que la position du point de couplage de la partie inférieure (61 ; 102) soit réglable de manière variable par rapport à la partie inférieure côté carrosserie (17).

7. Siège de véhicule (1) selon l'une des revendications 1 à 6,
**caractérisé en ce que**
le dispositif de couplage (20 ; 91 ; 106 ; 121 ; 141) comprend un dispositif de réglage mécanique ou pneumatique pour le déplacement de points de couplage (51 ; 101 ; 111 ; 115 ; 123A, 124A ; 143) par rapport à la partie supérieure côté partie d'assise (16) et/ou à la partie inférieure côté carrosserie (17).

8. Siège de véhicule selon l'une des revendications 1 à 7,
**caractérisé en ce que**
un des éléments de couplage (24, 25) comprend, pour la conception d'un point de couplage (123A, 124A), un palier rotatif (123) et/ou un palier linéaire (124).

9. Siège de véhicule (1) selon la revendication 8,
**caractérisé en ce que**
le palier linéaire (124) comprend une piste incurvée (125) le long de laquelle un point de couplage (124A) formé par le palier linéaire (124) est disposée de manière mobile.

10. Siège de véhicule (1) selon l'une des revendications 1 à 7,
**caractérisé en ce que**
un des éléments de couplage (24, 25) est disposé aussi bien de manière fixe au moyen d'une zone de montage (21 A) ainsi que de manière mobile au moyen d'un point de couplage (143), mobile par rapport à la partie supérieure côté partie d'assise (16) ou à la partie inférieure côté carrosserie (17), au niveau de la partie supérieure côté partie d'assise (16) ou au niveau de la partie inférieure côté carrosserie (17).

11. Siège de véhicule (1) selon l'une des revendications 3 à 10
**caractérisé en ce que**
l'unité de correction de position zéro (60) et/ou l'unité d'adaptation de la courbe caractéristique de ressort (65) sont disposé, par une unité de réglage de position de point de couplage (50 ; 97 ; 107 ; 122 ; 142) entre un des éléments de couplage (24, 25) et la partie supérieure côté partie d'assise (16) et la partie inférieure côté carrosserie (17), de façon à ce que l'élément de couplage (24, 25) soit relié de manière fonctionnelle, au moyen de l'unité de correction de position zéro (60) ou de l'unité d'adaptation de courbe caractéristique de ressort (65), avec la partie supérieure côté partie d'assise (16) ou avec la partie inférieure côté carrosserie (17).

12. Siège de véhicule (1) selon l'une des revendications 3 à 11,
**caractérisé en ce que**
l'unité de correction de position zéro (60) et/ou l'unité d'adaptation de courbe caractéristique de ressort (65) comprennent un dispositif de sélection de fréquence afin de pouvoir distinguer des signaux à hautes fréquences des signaux d'inclinaison.

13. Véhicule à moteur ou véhicule utilitaire à moteur (2) avec un compartiment passager et un siège de véhicule (1) situé à l'intérieur pour le logement d'un passager,
**caractérisé en ce que**
le véhicule à moteur ou le véhicule utilitaire à moteur (2) comprend un siège de véhicule (1) selon l'une des revendications précédentes.
